(19) Europäisches Patentamt
European Patent Office
Office européen des brevets

(11) EP 4 004 158 B1

(12) **FASCICULE DE BREVET EUROPEEN**

(45) Date de publication et mention de la délivrance du brevet:
**25.02.2026 Bulletin 2026/09**

(21) Numéro de dépôt: **20736703.8**

(22) Date de dépôt: **06.07.2020**

(51) Classification Internationale des Brevets (IPC):
***C10G 45/08*** (2006.01) ***C10G 45/38*** (2006.01)
***C10G 65/04*** (2006.01) ***C10G 11/00*** (2006.01)

(52) Classification Coopérative des Brevets (CPC):
**C10G 45/08; C10G 11/00; C10G 45/38;**
**C10G 65/04;** C10G 2300/104; C10G 2300/1044;
C10G 2300/202

(86) Numéro de dépôt international:
**PCT/EP2020/069034**

(87) Numéro de publication internationale:
**WO 2021/013528 (28.01.2021 Gazette 2021/04)**

(54) **PROCÉDÉ DE PRODUCTION D’UNE ESSENCE A BASSE TENEUR EN SOUFRE ET EN MERCAPTANS**

VERFAHREN ZUR HERSTELLUNG VON BENZIN MIT NIEDRIGEM GEHALT AN SCHWEFEL UND MERCAPTAN

METHOD FOR PRODUCING GASOLINE WITH LOW SULFUR AND MERCAPTAN CONTENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2019 FR 1908345**

(43) Date de publication de la demande:
**01.06.2022 Bulletin 2022/22**

(73) Titulaire: **IFP Energies nouvelles**
**92852 Rueil-Malmaison Cedex (FR)**

(72) Inventeurs:
- **COUDERC, Sophie**
  **92852 RUEIL-MALMAISON CEDEX (FR)**
- **GOMEZ, Adrien**
  **92852 RUEIL-MALMAISON CEDEX (FR)**
- **LOPEZ-GARCIA, Clementina**
  **92852 RUEIL-MALMAISON CEDEX (FR)**
- **LEFLAIVE, Philibert**
  **92852 RUEIL-MALMAISON CEDEX (FR)**
- **HUDEBINE, Damien**
  **92852 RUEIL-MALMAISON CEDEX (FR)**
- **MALDONADO, Floriane**
  **92852 RUEIL-MALMAISON CEDEX (FR)**

(74) Mandataire: **IFP Energies nouvelles**
**Département Propriété Industrielle**
**Rond Point de l’échangeur de Solaize**
**BP3**
**69360 Solaize (FR)**

(56) Documents cités:
**EP-A1- 1 077 247** **EP-A1- 2 816 094**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

## Description

### Domaine technique

La présente invention concerne un procédé de production d'essence à basse teneur en soufre et en mercaptans.

### Etat de la technique

La production d'essences répondant aux nouvelles normes environnementales nécessite que l'on diminue de façon importante leur teneur en soufre.

Il est par ailleurs connu que les essences de conversion, et plus particulièrement celles provenant du craquage catalytique, qui peuvent représenter 30 à 50 % du pool essence, ont des teneurs élevées en mono-oléfines et en soufre.

Le soufre présent dans les essences est pour cette raison imputable, à près de 90%, aux essences issues des procédés de craquage catalytique, que l'on appellera dans la suite essences de FCC (Fluid Catalytic Cracking selon la terminologie anglo-saxonne, que l'on peut traduire par craquage catalytique en lit fluidisé). Les essences de FCC constituent donc la charge préférée du procédé de la présente invention.

Parmi les voies possibles pour produire des carburants à faible teneur en soufre, celle qui a été très largement retenue consiste à traiter spécifiquement les bases essences riches en soufre par des procédés d'hydrodésulfuration catalytique en présence d'hydrogène. Les procédés traditionnels désulfurent les essences de manière non sélective en hydrogénant une grande partie des mono-oléfines, ce qui engendre une forte perte en indice d'octane et une forte consommation d'hydrogène. Les procédés les plus récents, tels que le procédé Prime G+ (marque commerciale), permettent de désulfurer les essences de craquage riches en oléfines, tout en limitant l'hydrogénation des mono-oléfines et par conséquent la perte d'octane et la forte consommation d'hydrogène qui en résulte. De tels procédés sont par exemple décrits dans les demandes de brevet EP1077247 et EP1174485.

Les composés soufrés résiduels généralement présents dans l'essence désulfurée peuvent être séparés en deux familles distinctes : les composés soufrés réfractaires non convertis présents dans la charge d'une part, et les composés soufrés formés dans le réacteur par des réactions secondaires dites de recombinaison. Parmi cette dernière famille de composés soufrés, les composés majoritaires sont les mercaptans issus de l'addition de l'$H_2S$ formé dans le réacteur sur les mono-oléfines présentes dans la charge.

Les mercaptans, de formule chimique R-SH, où R est un groupement alkyle, sont également appelés mercaptans de recombinaison. Leur formation ou leur décomposition obéit à l'équilibre thermodynamique de la réaction entre les mono-oléfines et l'hydrogène sulfuré pour former des mercaptans de recombinaison. Un exemple est illustré selon la réaction suivante :

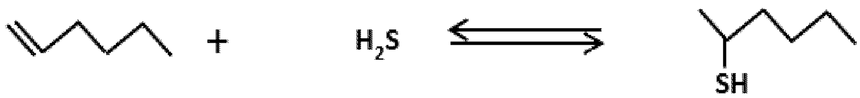

Le soufre contenu dans les mercaptans de recombinaison représente généralement entre 20% et 80% poids du soufre résiduel dans les essences désulfurées.

La formation des mercaptans de recombinaison est en particulier décrite dans le brevet US6231754 et la demande de brevet WO01/40409 qui enseignent diverses combinaisons de conditions opératoires et de catalyseurs permettant de limiter la formation de mercaptans de recombinaison.

D'autres solutions au problème de la formation des mercaptans de recombinaison sont basées sur un traitement des essences partiellement désulfurées pour en extraire lesdits mercaptans de recombinaison. Certaines de ces solutions sont décrites dans les demandes de brevets WO02/28988 ou WO01/79391.

Encore d'autres solutions sont décrites dans la littérature pour désulfurer les essences de craquage à l'aide de combinaison d'étapes d'hydrodésulfuration et d'élimination des mercaptans de recombinaison par réaction en thioéthers ou disulfures (aussi appelé adoucissement ou sweetening selon la terminologie anglo-saxonne) (voir par exemple US7799210, US6960291, US2007114156, EP2861094).

Le document WO2018/096063 décrit un procédé de production d'hydrocarbures à faible teneur en soufre et en mercaptans utilisant un rapport débit gaz/charge élevé.

L'obtention d'une essence à très basse teneur en soufre, typiquement à une teneur inférieure à 10 ppm poids, requiert donc l'élimination d'au moins une partie des mercaptans de recombinaison. La quasi-totalité des pays ont une spécification très basse en mercaptans dans les carburants (typiquement inférieure à 10 ppm soufre issu des RSH (mesure de la teneur en mercaptans par potentiométrie, méthode ASTM D3227). D'autres pays ont adopté une mesure de "Doctor Test" pour quantifier les mercaptans avec une spécification négative à respecter (méthode ASTM D4952).

Ainsi dans certains cas, il apparait que la spécification la plus contraignante, car la plus difficile à atteindre sans

nuire à l'indice d'octane, est la spécification en mercaptans et non celle du soufre total.

Lorsque l'essence est traitée par un enchainement de deux réacteurs sans élimination de l'$H_2S$ entre les deux étapes tel que décrit dans le document EP1077247, la première étape, aussi appelée l'étape d'HDS sélective, a généralement pour but de réaliser une désulfuration profonde de l'essence avec un minimum de saturation des oléfines (et pas de perte aromatique) conduisant à une rétention maximale en octane. Le catalyseur mis en œuvre est généralement un catalyseur de type CoMo. Lors de cette étape, des nouveaux composés soufrés sont formés par recombinaison de l'$H_2S$ issu de la désulfuration et des oléfines : les mercaptans de recombinaison.

La deuxième étape a généralement pour rôle de minimiser la quantité des mercaptans de recombinaison. Pour cela l'essence est alors traitée dans un réacteur d'hydrodésulfuration appelé aussi réacteur de finition avec un catalyseur généralement à base de nickel qui ne présente pratiquement aucune activité d'hydrogénation des oléfines et est capable de réduire la quantité de mercaptans de recombinaison. La température est généralement plus élevée dans le réacteur de finition afin de favoriser thermodynamiquement l'élimination des mercaptans. En pratique, un four est donc placé entre les deux réacteurs afin de pouvoir élever la température du second réacteur à une température supérieure à celle du premier.

Un autre levier pour réduire les mercaptans de recombinaison dans le deuxième réacteur est d'augmenter le rapport entre le débit d'hydrogène et le débit de charge à traiter, aussi appelé ratio $H_2$/HC par la suite. L'augmentation du ratio $H_2$/HC dans l'étape de finition permet par dilution de diminuer la pression partielle de l'$H_2S$ (pp$H_2S$) formé par hydrodésulfuration lors de l'étape d'HDS sélective. Cette baisse de la pression partielle de l'$H_2S$ favorise l'élimination des mercaptans de recombinaison par la réaction entre les oléfines et l'$H_2S$ (équilibre thermodynamique).

On peut donc augmenter la température et/ou le ratio $H_2$/HC pour diminuer la teneur en mercaptans de recombinaison dans l'étape de finition. Cependant, la température et/ou le ratio $H_2$/HC ne peuvent être augmentés sans limite. En effet, une température trop élevée dans l'étape de finition provoque des problèmes de craquage de l'essence et de cokage du catalyseur et diminue donc la durée du cycle du catalyseur. De même, une injection d'hydrogène très élevée par rapport au débit de charge représente un surcoût d'hydrogène pour le raffineur. De plus, des réactions d'hydrogénation des oléfines peuvent survenir.

Il faut donc trouver d'autres moyens pour diminuer la quantité de mercaptans de recombinaison, notamment lorsque l'essence d'origine est fortement chargée en soufre.

Résumé de l'invention

Un but de la présente invention est de proposer un procédé de traitement d'une essence, qui permet de diminuer la teneur en mercaptans de ladite essence tout en limitant au maximum la perte d'octane et la consommation de réactifs tels que l'hydrogène.

La présente invention propose un procédé permettant de traiter une essence contenant des composés soufrés en utilisant un enchainement de deux réacteurs sans élimination de l'$H_2S$ entre les deux étapes, suivie d'une étape de séparation de l'$H_2S$ formé lors de ces étapes et d'une étape supplémentaire d'hydrodésulfuration effectuée dans des conditions très douces.

Plus particulièrement, l'invention a pour objet un procédé de traitement d'une essence contenant des composés soufrés, des oléfines et des dioléfines, le procédé comprenant au moins les étapes suivantes:

a) on met en contact dans au moins un réacteur, l'essence, de l'hydrogène et un catalyseur d'hydrodésulfuration comprenant un support d'oxyde et une phase active comprenant un métal du groupe VIB et un métal du groupe VIII, à une température comprise entre 210 et 320°C, à une pression comprise entre 1 et 4 MPa, avec une vitesse spatiale comprise entre 1 et 10 $h^{-1}$ et un rapport entre le débit d'hydrogène exprimé en normaux $m^3$ par heure et le débit de charge à traiter exprimé en $m^3$ par heure aux conditions standards compris entre 100 $Nm^3/m^3$ et 600 $Nm^3/m^3$, de manière à convertir au moins une partie des composés soufrés en $H_2S$,

b) on met en contact dans au moins un réacteur, l'effluent issu de l'étape a) sans élimination de l'$H_2S$ formé, de l'hydrogène et un catalyseur d'hydrodésulfuration comprenant un support d'oxyde et une phase active constituée d'au moins un métal du groupe VIII, à une température comprise entre 280 et 400°C, à une pression comprise entre 0,5 et 5 MPa, avec une vitesse spatiale comprise entre 1 et 10 $h^{-1}$ et un rapport entre le débit d'hydrogène exprimé en normaux $m^3$ par heure et le débit de charge à traiter exprimé en $m^3$ par heure aux conditions standards compris entre 100 et 600 $Nm^3/m^3$, ladite température de l'étape b) étant plus élevée que la température de l'étape a),

c) on effectue une étape de séparation de l'$H_2S$ formé et présent dans l'effluent issu de l'étape b),

d) on met en contact, dans au moins un réacteur, l'effluent appauvri en $H_2S$ issu de l'étape c), de l'hydrogène et un catalyseur d'hydrodésulfuration comprenant un support d'oxyde et une phase active comprenant un métal du groupe VIB et un métal du groupe VIII ou une phase active constituée d'au moins un métal du groupe VIII, à une température comprise entre 150 et 330°C, à une pression comprise entre 0,5 et 5 MPa, avec une vitesse spatiale comprise entre 0,5 et 10 $h^{-1}$ et un rapport entre le débit d'hydrogène et le débit de charge à traiter inférieur à celui de l'étape a), ledit rapport entre le débit d'hydrogène exprimé en normaux m3 par heure et le débit de charge à traiter exprimé en m3 par

heure aux conditions standards compris entre 40 et 250 $Nm^3/m^3$,

e) on effectue une étape de séparation de l'$H_2S$ formé et présent dans l'effluent issu de l'étape d).

Il a en effet été constaté de façon surprenante qu'un enchaînement spécifique de différentes étapes d'hydrodésulfuration utilisant pour chacune des conditions opératoires spécifiques en combinaison avec des catalyseurs spécifiques pour chaque étape d'hydrodésulfuration combinés avec des étapes de séparation d'$H_2S$ permet d'opérer à des conditions qui sont thermodynamiquement favorables à l'élimination des mercaptans de recombinaison, et mène donc à une conversion suffisante des mercaptans de recombinaison.

En effet, la mise en œuvre des étapes d'hydrodésulfuration a) et b), l'étape b) étant effectuée à des conditions opératoires plus sévères et en présence d'un catalyseur à base d'un métal du groupe VIII uniquement permet d'atteindre un niveau global élevé d'hydrodésulfuration. Les composés soufrés résiduels dans l'effluent de l'étape b) sont essentiellement des mercaptans de recombinaison. L'étape de séparation c) favorise du point de vue de l'équilibre thermodynamique la décomposition des mercaptans de recombinaison et donc leur élimination dans l'étape d). En effet, les mercaptans de recombinaison restants dans l'effluent après l'étape c) sont des composés relativement faciles à hydrodésulfurer par rapport aux composés plus réfractaires éliminés lors de l'étape b). Les mercaptans de recombinaison restants peuvent donc être hydrodésulfurés lors de l'étape d) à des conditions opératoires relativement douces. Ainsi le procédé selon l'invention permet de produire une essence ayant une spécification de teneur basse en soufre et en mercaptans sans nécessiter une étape de finition d'hydrodésulfuration sévère et couteuse tout en limitant la perte d'octane.

Un autre avantage du procédé selon l'invention vient du fait qu'il permet d'atteindre une teneur très basse en mercaptans (e.g. inférieure à 10 ppm poids soufre) dans l'essence désulfurée finale avec des conditions opératoires pour l'étape b) d'hydrodésulfuration beaucoup moins sévères (par exemple diminution importante de la température et/ou de la pression opératoire) que celles décrites pour l'étape de finition du procédé selon EP1077247, ce qui a pour effet de limiter la perte d'octane, d'augmenter la durée de vie du catalyseur de l'étape d'hydrodésulfuration et également de réduire la consommation d'énergie.

Un autre avantage du procédé selon l'invention vient du fait qu'il peut facilement être implanté sur des unités existantes (remodelage ou revamping selon la terminologie anglo-saxonne).

Selon une variante de l'invention, le catalyseur de l'étape a) comprend de l'alumine et une phase active comprenant du cobalt, du molybdène et éventuellement du phosphore, ledit catalyseur contenant une teneur en poids par rapport au poids total de catalyseur d'oxyde de cobalt, sous forme CoO, comprise entre 0,1 et 10%, une teneur en poids par rapport au poids total de catalyseur d'oxyde de molybdène, sous forme $MoO_3$, comprise entre 1 et 20%, un rapport molaire cobalt/molybdène compris entre 0,1 et 0,8, une teneur en poids par rapport au poids total de catalyseur d'oxyde de phosphore sous forme $P_2O_5$ comprise entre 0,3 et 10% lorsque le phosphore est présent, ledit catalyseur ayant une surface spécifique entre 30 et 180 $m^2/g$.

Selon une variante, le catalyseur de l'étape b) est constitué d'alumine et de nickel, ledit catalyseur contenant une teneur en poids par rapport au poids total de catalyseur d'oxyde de nickel, sous forme NiO, comprise entre 5 et 20%, ledit catalyseur ayant une surface spécifique entre 30 et 180 $m^2/g$.

Selon une variante, le catalyseur de l'étape d) est constitué d'alumine et d'une phase active cobalt-molybdène, ledit catalyseur contenant une teneur en poids par rapport au poids total de catalyseur d'oxyde de cobalt, sous forme CoO, comprise entre 0,1 et 10%, une teneur en poids par rapport au poids total de catalyseur d'oxyde de molybdène, sous forme $MoO_3$, comprise entre 1 et 20%, un rapport molaire cobalt/molybdène compris entre 0,1 et 0,8, ledit catalyseur ayant une surface spécifique entre 30 et 180 $m^2/g$.

Selon une autre variante, le catalyseur de l'étape d) est constitué d'alumine et de nickel, ledit catalyseur contenant une teneur en poids par rapport au poids total de catalyseur d'oxyde de nickel, sous forme NiO, comprise entre 5 et 20%, ledit catalyseur ayant une surface spécifique entre 30 et 180 $m^2/g$.

Selon une variante, la température de l'étape b) est supérieure d'au moins 5°C à la température de l'étape a).

Selon une variante, la température de l'étape d) est inférieure d'au moins 5°C à la température de l'étape b).

Selon une variante, le ratio rapport entre le débit d'hydrogène et le débit de charge à traiter à l'entrée du réacteur de l'étape a) / rapport entre le débit d'hydrogène et le débit de charge à traiter à l'entrée du réacteur de l'étape d) est supérieur ou égal à 1,05.

Selon une variante, les étapes de séparation c) et e) sont effectuées dans un débutaniseur ou une section de stripage.

Selon une variante, avant l'étape a) on effectue une étape de distillation de l'essence de manière à fractionner ladite essence en au moins deux coupes essence légère et lourde et on traite la coupe essence lourde dans les étapes a), b), c), d) et e).

Selon une variante, avant l'étape a) et avant toute éventuelle étape de distillation, on met en contact l'essence avec de l'hydrogène et un catalyseur d'hydrogénation sélective pour hydrogéner sélectivement les dioléfines contenues dans ladite l'essence en oléfines.

Selon une variante, l'essence est une essence de craquage catalytique.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

La teneur en métaux est mesurée par fluorescence X.

Description des figures

La figure 1 illustre un mode de réalisation selon l'invention.
La figure 2 illustre un procédé selon l'état de la technique.

Description détaillée de l'invention

Description de la charge

Le procédé selon l'invention permet de traiter tout type de coupe essence contenant des composés soufrés et des oléfines, telle que par exemple une coupe issue d'une unité de cokéfaction (coking selon la terminologie anglo-saxonne), de viscoréduction (visbreaking selon la terminologie anglo-saxonne), de vapocraquage (steam cracking selon la terminologie anglo-saxonne) ou de craquage catalytique (FCC, Fluid Catalytic Cracking selon la terminologie anglo-saxonne). Cette essence peut éventuellement être composée d'une fraction significative d'essence provenant d'autres procédés de production telle que la distillation atmosphérique (essence issue d'une distillation directe (ou essence straight run selon la terminologie anglo-saxonne)) ou de procédés de conversion (essence de cokéfaction ou de vapocraquage). La dite charge est de préférence constituée d'une coupe essence issue d'une unité de craquage catalytique.

La charge est une coupe essence contenant des composés soufrés et des oléfines dont la gamme de points d'ébullition s'étend typiquement depuis les points d'ébullitions des hydrocarbures à 2 ou 3 atomes de carbone (C2 ou C3) jusqu'à 260°C, de préférence depuis les points d'ébullitions des hydrocarbures à 2 ou 3 atomes de carbone (C2 ou C3) jusqu'à 220°C, de manière plus préférée depuis les points d'ébullitions des hydrocarbures à 5 atomes de carbone jusqu'à 220°C. Le procédé selon l'invention peut aussi traiter des charges ayant des points finaux inférieurs à ceux mentionnés précédemment, tel que par exemple une coupe C5-180°C.

La teneur en soufre des coupes essences produites par craquage catalytique (FCC) dépend de la teneur en soufre de la charge traitée par le FCC, de la présence ou non d'un prétraitement de la charge du FCC, ainsi que du point final de la coupe. Généralement, les teneurs en soufre de l'intégralité d'une coupe essence, notamment celles provenant du FCC, sont supérieures à 100 ppm en poids et la plupart du temps supérieures à 500 ppm en poids. Pour des essences ayant des points finaux supérieurs à 200°C, les teneurs en soufre sont souvent supérieures à 1000 ppm en poids, elles peuvent même dans certains cas atteindre des valeurs de l'ordre de 4000 à 5000 ppm en poids.

La charge traitée par le procédé selon l'invention peut être une charge contenant des composés soufrés dans une teneur supérieure à 1000 ppm en poids de soufre, et souvent supérieure à 1500 ppm.

Par ailleurs les essences issues d'unités de craquage catalytique (FCC) contiennent, en moyenne, entre 0,5% et 5% poids de dioléfines, entre 20% et 50% poids d'oléfines, entre 10 ppm et 0,5% poids de soufre dont généralement moins de 300 ppm de mercaptans.

**Description de l'étape d'hydrodésulfuration a)**

L'étape d'hydrodésulfuration a) est mise en œuvre pour réduire la teneur en soufre de l'essence à traiter en convertissant les composés soufrés en $H_2S$ qui est ensuite éliminé dans l'étape c).

L'étape d'hydrodésulfuration a) consiste à mettre en contact l'essence à traiter avec de l'hydrogène, dans un ou plusieurs réacteurs d'hydrodésulfuration, contenant un ou plusieurs catalyseurs adaptés pour réaliser l'hydrodésulfuration.

Selon un mode préféré de réalisation de l'invention, l'étape a) est mise en œuvre dans le but de réaliser une hydrodésulfuration de façon sélective, c'est-à-dire avec un taux d'hydrogénation des mono-oléfines inférieur à 80%, de préférence inférieur à 70% et de façon très préférée inférieur à 60%.

La température est généralement comprise entre 210 et 320°C et de préférence comprise entre 220 et 290°C. La température employée doit être suffisante pour maintenir l'essence à traiter en phase vapeur dans le réacteur. Dans le cas où l'étape a) d'hydrodésulfuration est effectuée dans plusieurs réacteurs en série, la température de chaque réacteur est généralement supérieure d'au moins 5°C, de préférence d'au moins 10°C et de façon très préférée d'au moins 30°C à la

température du réacteur qui le précède.

La pression d'opération de cette étape est généralement comprise entre 1 et 4 MPa et de préférence comprise entre 1,5 et 3 MPa.

La quantité de catalyseur mise en œuvre dans chaque réacteur est généralement telle que le rapport entre le débit d'essence à traiter exprimé en $m^3$ par heure aux conditions standards, par $m^3$ de catalyseur (également appelé vitesse spatiale) est compris entre 1 et 10 $h^{-1}$ et de préférence entre 2 et 8 $h^{-1}$.

Le débit d'hydrogène est généralement tel que le rapport entre le débit d'hydrogène exprimé en normaux $m^3$ par heure ($Nm^3/h$) et le débit de charge à traiter exprimé en $m^3$ par heure aux conditions standards (15°C, 0,1 MPa) est compris entre 100 et 600 $Nm^3/m^3$, de préférence entre 200 et 500 $Nm^3/m^3$. On entend par normaux $m^3$ la quantité de gaz dans un volume de 1 $m^3$ à 0°C et 0,1 MPa.

L'hydrogène nécessaire à cette étape peut être de l'hydrogène frais ou de l'hydrogène recyclé, de préférence débarrassé de l'$H_2S$, ou un mélange d'hydrogène frais et d'hydrogène recyclé. De préférence, on utilisera de l'hydrogène frais.

Le taux de désulfuration de l'étape a), qui dépend de la teneur en soufre de la charge à traiter, est généralement supérieur à 50% et de préférence supérieur à 70% de sorte que le produit issu de l'étape a) contient moins de 100 ppm poids de soufre et de façon préférée moins de 50 ppm poids de soufre.

Le catalyseur utilisé dans l'étape a) doit présenter une bonne sélectivité vis-à-vis des réactions d'hydrodésulfuration par rapport à la réaction d'hydrogénation des oléfines.

Le catalyseur d'hydrodésulfuration de l'étape a) comprend un support d'oxyde et une phase active comprenant un métal du groupe VIB et un métal du groupe VIII et optionnellement du phosphore et/ou un composé organique tel que décrit ci-après.

Le métal du groupe VIB présent dans la phase active du catalyseur est préférentiellement choisi parmi le molybdène et le tungstène. Le métal du groupe VIII présent dans la phase active du catalyseur est préférentiellement choisi parmi le cobalt, le nickel et le mélange de ces deux éléments. La phase active du catalyseur est choisie de préférence dans le groupe formé par la combinaison des éléments nickel-molybdène, cobalt-molybdène et nickel-cobalt-molybdène et de manière très préférée la phase active est constituée de cobalt et de molybdène.

La teneur en métal du groupe VIII est comprise entre 0,1 et 10% poids d'oxyde du métal du groupe VIII par rapport au poids total du catalyseur, de préférence comprise entre 0,6 et 8% poids, de préférence comprise entre 2 et 7% poids, de manière très préférée comprise entre 2 et 6% poids et de manière encore plus préférée comprise entre 2,5 et 6% poids.

La teneur en métal du groupe VIB est comprise entre 1 et 20 % poids d'oxyde du métal du groupe VIB par rapport au poids total du catalyseur, de préférence comprise entre 2 et 18 % poids, de manière très préférée comprise entre 3 et 16% poids.

Le rapport molaire métal du groupe VIII sur métal du groupe VIB du catalyseur est généralement compris entre 0,1 et 0,8, de préférence compris entre 0,2 et 0,6.

En outre, le catalyseur présente une densité en métal du groupe VIB, exprimée en nombre d'atomes dudit métal par unité de surface du catalyseur, qui est comprise entre 0,5 et 30 atomes de métal du groupe VIB par $nm^2$ de catalyseur, de manière préférée comprise entre 2 et 25, de manière encore plus préférée comprise entre 3 et 15. La densité en métal du groupe VIB, exprimée en nombre d'atomes de métal du groupe VIB par unité de surface du catalyseur (nombre d'atomes de métal du groupe VIB par $nm^2$ de catalyseur) est calculée par exemple à partir de la relation suivante :

$$\mathrm{d\ (métal\ du\ groupe\ VIB)} = \frac{(\mathrm{X} \times \mathrm{N_A})}{(100 \times 10^{18} \times S \times M_M)}$$

avec :

- X = % poids de métal du groupe VIB;
- $N_A$ = Nombre d'Avogadro égal à $6{,}022.10^{23}$;
- S = Surface spécifique du catalyseur ($m^2/g$), mesurée selon la norme ASTM D3663;
- $M_M$ = Masse molaire du métal du groupe VIB (par exemple 95,94 g/mol pour le molybdène).

A titre d'exemple, si le catalyseur contient 20% poids d'oxyde de molybdène $MoO_3$ (soit 13,33% poids de Mo) et a une surface spécifique de 100 $m^2/g$, la densité d(Mo) est égale à :

$$\mathrm{d\ (Mo)} = \frac{(13{,}33 \times \mathrm{N_A})}{(100 \times 10^{18} \times 100 \times 96)} = 8{,}4\ \mathrm{atomes\ de\ Mo/nm^2\ de\ catalyseur}$$

Optionnellement, le catalyseur peut présenter en outre une teneur en phosphore généralement comprise entre

0,3 et 10% poids de $P_2O_5$ par rapport au poids total de catalyseur, de préférence entre 0,5 et 5% poids, de manière très préférée comprise entre 1 et 3% poids. Par exemple, le phosphore présent dans le catalyseur est combiné avec le métal du groupe VIB et éventuellement avec également le métal du groupe VIII sous la forme d'hétéropolyanions.

Par ailleurs, le rapport molaire phosphore/(métal du groupe VIB) est généralement compris entre 0,1 et 0,7, de préférence compris entre 0,2 et 0,6, lorsque le phosphore est présent.

De manière préférée, le catalyseur se caractérise par une surface spécifique comprise entre 5 et 400 $m^2/g$, de préférence comprise entre 10 et 250 $m^2/g$, de préférence comprise entre 20 et 200 $m^2/g$, de manière très préférée comprise entre 30 et 180 $m^2/g$. La surface spécifique est déterminée dans la présente invention par la méthode B.E.T selon la norme ASTM D3663, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Microméritics™.

Le volume poreux total du catalyseur est généralement compris entre 0,4 $cm^3/g$ et 1,3 $cm^3/g$, de préférence compris entre 0,6 $cm^3/g$ et 1,1 $cm^3/g$. Le volume poreux total est mesuré par porosimétrie au mercure selon la norme ASTM D4284 avec un angle de mouillage de 140°, telle que décrite dans le même ouvrage.

La densité de remplissage tassée (DRT) du catalyseur est généralement comprise entre 0,4 et 0,7 g/mL, de préférence comprise entre 0,45 et 0,69 g/mL. La mesure de DRT consiste à introduire le catalyseur dans une éprouvette dont on a préalablement déterminé le volume puis, par vibration, à le tasser jusqu'à obtenir un volume constant. La masse volumique apparente du produit tassé est calculée en comparant la masse introduite et le volume occupé après tassement.

Avantageusement le catalyseur d'hydrodésulfuration, avant sulfuration, présente un diamètre moyen de pore supérieur à 20 nm, de manière préférée supérieur à 25 nm, voire 30 nm et souvent compris entre 20 et 140 nm, de préférence entre 20 et 100 nm, et très préférentiellement entre 25 et 80 nm. Le diamètre de pore est mesuré par porosimétrie au mercure selon la norme ASTM D4284 avec un angle de mouillage de 140°.

Le catalyseur peut se trouver sous forme d'extrudés de petit diamètre, cylindriques ou multilobés (trilobes, quadrilobes,...), ou de sphères.

Le support d'oxyde du catalyseur est habituellement un solide poreux choisi dans le groupe constitué par : les alumines, la silice, les silices alumine ou encore les oxydes de titane ou de magnésium utilisés seul ou en mélange avec l'alumine ou la silice alumine. Il est de préférence choisi dans le groupe constitué par la silice, la famille des alumines de transition et les silices alumine, de manière très préférée, le support d'oxyde est essentiellement constitué d'alumine, c'est-à-dire qu'il comprend au moins 51 % poids, de préférence au moins 60 % poids, de manière très préférée au moins 80 % poids, voire au moins 90 % poids d'alumine. Il est de préférence constitué uniquement d'alumine. De manière préférée, le support d'oxyde du catalyseur est une alumine « haute température », c'est-à-dire qui contient des alumines de phase thêta, delta, kappa ou alpha, seules ou en mélange et une quantité inférieure à 20% d'alumine de phase gamma, chi ou êta.

Le catalyseur peut également comprendre en outre au moins un composé organique contenant de l'oxygène et/ou de l'azote et/ou du soufre avant sulfuration.

Un mode de réalisation très préféré de l'invention correspond à la mise en œuvre pour l'étape a) d'un catalyseur comprenant de l'alumine et une phase active comprenant du cobalt, du molybdène et éventuellement du phosphore, ledit catalyseur contenant une teneur en poids par rapport au poids total de catalyseur d'oxyde de cobalt, sous forme CoO, comprise entre 0,1 et 10%, une teneur en poids par rapport au poids total de catalyseur d'oxyde de molybdène, sous forme $MoO_3$, comprise entre 1 et 20%, un rapport molaire cobalt/molybdène compris entre 0,1 et 0,8, une teneur en poids par rapport au poids total de catalyseur d'oxyde de phosphore sous forme $P_2O_5$ comprise entre 0,3 et 10% lorsque le phosphore est présent, ledit catalyseur ayant une surface spécifique entre 30 et 180 $m^2/g$. Selon un mode de réalisation, la phase active est constituée de cobalt et de molybdène. Selon une autre mode de réalisation, la phase active est constituée de cobalt, de molybdène et de phosphore.

**Description de l'étape d'hydrodésulfuration de finition b)**

Lors de l'étape d'hydrodésulfuration a), on transforme une grande partie des composés soufrés en $H_2S$. Les composés soufrés restants sont essentiellement des composés soufrés réfractaires et les mercaptans de recombinaison issus de l'addition de l'$H_2S$ formé dans l'étape a) sur les mono-oléfines présentes dans la charge.

L'étape d'hydrodésulfuration dite de finition b), qui est effectuée à une température plus élevée que celle de l'étape a) et en présence d'un catalyseur particulier, est principalement mise en œuvre pour diminuer la teneur des mercaptans de recombinaison. En effet, en utilisant une température plus élevée dans cette étape par rapport à la température de l'étape a), la formation d'oléfines et d'$H_2S$ va être favorisée par l'équilibre thermodynamique. L'étape b) permet également d'hydrodésulfurer les composés soufrés plus réfractaires.

L'étape d'hydrodésulfuration b) consiste à mettre en contact l'effluent de l'étape a) optionnellement avec un ajout d'hydrogène, dans un ou plusieurs réacteurs d'hydrodésulfuration, contenant un ou plusieurs catalyseurs adaptés pour

réaliser l'hydrodésulfuration.

L'étape d'hydrodésulfuration b) est réalisée sans hydrogénation importante des oléfines. Le taux d'hydrogénation des oléfines du catalyseur de l'étape d'hydrodésulfuration b) est en règle générale inférieur à 5% et encore plus généralement inférieur à 2%.

La température de cette étape est généralement comprise entre 280 et 400°C, de manière plus préférée entre 290 et 380°C, et de manière très préférée entre 300 et 360°C. La température de cette étape b) est généralement supérieure d'au moins 5°C, de préférence d'au moins 10°C et de façon très préférée d'au moins 30°C à la température de l'étape a).

La pression d'opération de cette étape est généralement comprise entre 0,5 et 5 MPa et de préférence comprise entre 1 et 3 MPa.

La quantité de catalyseur mise en œuvre dans chaque réacteur est généralement telle que le rapport entre le débit d'essence à traiter exprimé en $m^3$ par heure aux conditions standards, par $m^3$ de catalyseur (également appelé vitesse spatiale) est compris entre 1 et 10 $h^{-1}$ et de préférence entre 2 et 8 $h^{-1}$.

De manière préférée, le débit d'hydrogène est subi et égal à la quantité injectée dans l'étape a) diminuée de l'hydrogène consommé dans l'étape a). Le débit d'hydrogène est généralement tel que le rapport entre le débit d'hydrogène exprimé en normaux $m^3$ par heure ($Nm^3/h$) et le débit de charge à traiter exprimé en $m^3$ par heure aux conditions standards (15°C, 0,1 MPa) est compris entre 100 et 600 $Nm^3/m^3$, de préférence entre 200 et 500 $Nm^3/m^3$.

Le taux de désulfuration de l'étape b), qui dépend de la teneur en soufre de la charge à traiter, est généralement supérieur à 50% et de préférence supérieur à 70% de sorte que le produit issu de l'étape b) contient moins de 60 ppm poids de soufre et de façon préférée moins de 40 ppm poids de soufre.

Les étapes d'hydrodésulfuration a) et b) peuvent être réalisées soit dans un seul réacteur contenant les deux catalyseurs, soit dans au moins deux réacteurs différents. Quand les étapes a) et b) sont réalisées à l'aide de deux réacteurs, ces deux derniers sont placés en série, le second réacteur traitant intégralement l'effluent en sortie du premier réacteur (sans séparation du liquide et du gaz entre le premier et le second réacteur).

Le catalyseur de l'étape b) est de nature et/ou de composition différente de celui utilisé dans l'étape a). Le catalyseur de l'étape b) est notamment un catalyseur d'hydrodésulfuration très sélectif : il permet d'hydrodésulfurer sans hydrogéner les oléfines et donc de maintenir l'indice d'octane.

Le catalyseur qui peut convenir à cette étape b) du procédé selon l'invention, sans que cette liste soit limitative, est un catalyseur comprenant un support d'oxyde et une phase active constituée d'au moins un métal du groupe VIII, et de préférence choisi dans le groupe formé par le nickel, le cobalt, le fer. Ces métaux peuvent être utilisés seuls ou en combinaison. De préférence, la phase active est constituée d'un métal du groupe VIII, de préférence du nickel. De façon particulièrement préférée, la phase active est constituée de nickel.

La teneur en métal du groupe VIII est comprise entre 1 et 60% poids d'oxyde du métal du groupe VIII par rapport au poids total du catalyseur, de préférence comprise entre 5 et 30% poids, de manière très préférée comprise entre 5 et 20% poids.

De manière préférée, le catalyseur se caractérise par une surface spécifique comprise entre 5 et 400 $m^2/g$, de préférence comprise entre 10 et 250 $m^2/g$, de préférence comprise entre 20 et 200 $m^2/g$, de manière très préférée comprise entre 30 et 180 $m^2/g$. La surface spécifique est déterminée dans la présente invention par la méthode B.E.T selon la norme ASTM D3663, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Microméritics™.

Le volume poreux du catalyseur est généralement compris entre 0,4 $cm^3/g$ et 1,3 $cm^3/g$, de préférence compris entre 0,6 $cm^3/g$ et 1,1 $cm^3/g$. Le volume poreux total est mesuré par porosimétrie au mercure selon la norme ASTM D4284 avec un angle de mouillage de 140°, telle que décrite dans le même ouvrage.

La densité de remplissage tassée (DRT) du catalyseur est généralement comprise entre 0,4 et 0,7 g/mL, de préférence comprise entre 0,45 et 0,69 g/mL.

La mesure de DRT consiste à introduire le catalyseur dans une éprouvette dont on a préalablement déterminé le volume puis, par vibration, à le tasser jusqu'à obtenir un volume constant. La masse volumique apparente du produit tassé est calculée en comparant la masse introduite et le volume occupé après tassement.

Avantageusement le catalyseur de l'étape b), avant sulfuration, présente un diamètre moyen de pore supérieur à 20 nm, de manière préférée supérieur à 25 nm, voire 30 nm et souvent compris entre 20 et 140 nm, de préférence entre 20 et 100 nm, et très préférentiellement entre 25 et 80 nm. Le diamètre de pore est mesuré par porosimétrie au mercure selon la norme ASTM D4284 avec un angle de mouillage de 140°.

Le catalyseur peut se trouver sous forme d'extrudés de petit diamètre, cylindriques ou multilobés (trilobes, quadrilobes,...), ou de sphères.

Le support d'oxyde du catalyseur est habituellement un solide poreux choisi dans le groupe constitué par : les alumines, la silice, les silices alumine ou encore les oxydes de titane ou de magnésium utilisés seul ou en mélange avec l'alumine ou la silice alumine. Il est de préférence choisi dans le groupe constitué par la silice, la famille des alumines de

transition et les silices alumine, de manière très préférée, le support d'oxyde est essentiellement constitué d'alumine, c'est-à-dire qu'il comprend au moins 51 % poids, de préférence au moins 60 % poids, de manière très préféré au moins 80 % poids, voire au moins 90 % poids d'alumine. Il est de préférence constitué uniquement d'alumine. De manière préférée, le support d'oxyde du catalyseur est une alumine « haute température », c'est-à-dire qui contient des alumines de phase thêta, delta, kappa ou alpha, seules ou en mélange et une quantité inférieure à 20% d'alumine de phase gamma, chi ou êta.

Un mode de réalisation très préféré de l'invention correspond à la mise en œuvre pour l'étape b) d'un catalyseur constitué d'alumine et de nickel, ledit catalyseur contenant une teneur en poids par rapport au poids total de catalyseur d'oxyde de nickel, sous forme NiO, comprise entre 5 et 20%, ledit catalyseur ayant une surface spécifique entre 30 et 180 $m^2$/g.

Le catalyseur de l'étape d'hydrodésulfuration b) est caractérisé par une activité catalytique d'hydrodésulfuration généralement comprise entre 1% et 90%, préférentiellement comprise entre 1% et 70%, et de manière très préférée comprise entre 1% et 50% de l'activité catalytique du catalyseur de l'étape d'hydrodésulfuration a).

**Description de l'étape de séparation de l'$H_2S$ (étape c)**

Cette étape est mise en œuvre afin de séparer l'excès d'hydrogène ainsi que l'$H_2S$ formé lors des étapes a) et b). Toute méthode connue de l'homme du métier peut être envisagée.

Selon un premier mode de réalisation, après les étapes d'hydrodésulfuration a) et b), l'effluent est refroidi à une température généralement inférieure à 80°C et de préférence inférieure à 60°C afin de condenser les hydrocarbures. Les phases gaz et liquide sont ensuite séparées dans un ballon de séparation. La fraction liquide qui contient l'essence désulfurée ainsi qu'une fraction de l'$H_2S$ dissous est envoyée vers une colonne de stabilisation ou débutaniseur. Cette colonne sépare une coupe de tête essentiellement constituée d'$H_2S$ résiduel et de composés hydrocarbures ayant une température d'ébullition inférieure ou égale à celle du butane et une coupe de fond débarrassée de l'$H_2S$, appelée essence stabilisée, contenant les composés ayant une température d'ébullition supérieure à celle du butane.

Selon un second mode de réalisation, après l'étape de condensation, la fraction liquide qui contient l'essence désulfurée ainsi qu'une fraction de l'$H_2S$ dissous est envoyée vers une section de stripage, tandis que la fraction gazeuse constituée principalement d'hydrogène et de $H_2S$ est envoyée vers une section de purification. Le stripage peut être réalisé en chauffant la fraction hydrocarbonée seule ou avec une injection d'hydrogène ou de vapeur d'eau, dans une colonne de distillation afin d'extraire en tête, les composés légers qui ont été entraînés par dissolution dans la fraction liquide ainsi que l'$H_2S$ résiduel dissous. La température de l'essence strippée récupérée en fond de colonne est généralement comprise entre 120°C et 250°C.

De préférence, l'étape de séparation c) est effectuée dans une colonne de stabilisation ou débutaniseur. En effet, une colonne de stabilisation permet de séparer l'$H_2S$ plus efficacement qu'une section de stripage.

L'étape c) est de préférence mise en œuvre afin que le soufre sous forme d'$H_2S$ restant dans l'essence désulfurée, avant l'étape d'hydrodésulfuration douce d), représente moins de 30%, de préférence moins de 20% et de manière plus préférée moins de 10% du soufre total présent dans la fraction hydrocarbonée traitée.

**Description de l'étape d'hydrodésulfuration douce d)**

Cette étape d'hydrodésulfuration consiste en la mise en contact à des conditions opératoires relativement douces, dans au moins un réacteur, l'effluent appauvri en $H_2S$ issu de l'étape c), de l'hydrogène et un catalyseur d'hydrodésulfuration. En effet, les mercaptans de recombinaison restants dans l'effluent après l'étape b) sont des composés relativement faciles à hydrodésulfurer par rapport aux composés plus réfractaires éliminés lors de l'étape b).

On entend par conditions douces notamment un rapport débit $H_2$/débit charge plus faible que le rapport des étapes a) et b), combiné de préférence avec une température moins élevée que la température de l'étape b) et éventuellement inférieure à celle de l'étape a). En effet, ce faible rapport de débit $H_2$/débit charge permet d'hydrodésulfurer les mercaptans résiduels sans pour autant hydrogéner les oléfines. Tout comme les étapes d'hydrodésulfuration précédentes a) et b), l'étape d) est mise en œuvre dans le but de réaliser une hydrodésulfuration de façon sélective, c'est-à-dire avec un taux d'hydrogénation des mono-oléfines inférieur à 80%, de préférence inférieur à 70% et de façon très préférée inférieur à 60%.

La pression d'opération de cette étape est généralement comprise entre 0,5 et 5 MPa et de préférence comprise entre 1 et 3 MPa. La température est généralement comprise entre 150 et 330°C et de préférence comprise entre 180 et 300°C. La température de cette étape d) est généralement inférieure d'au moins 5°C, de préférence d'au moins 10°C et de façon très préférée d'au moins 15°C à la température de l'étape b).

La quantité de catalyseur mise en œuvre dans l'étape d) est généralement telle que le rapport entre le débit d'essence à traiter exprimé en $m^3$ par heure aux conditions standards, par $m^3$ de catalyseur (également appelé vitesse spatiale) est compris entre 1 et 10 $h^{-1}$ et de préférence entre 2 et 8 $h^{-1}$.

Le rapport entre le débit d'hydrogène et le débit de charge à traiter, aussi appelé ratio $H_2$/HC de l'étape d) est inférieur au ratio $H_2$/HC de l'étape a). On entend par le rapport entre le débit d'hydrogène et le débit de charge à traiter, le rapport à l'entrée du réacteur de l'étape concernée. Le ratio ou facteur d'ajustement défini par F= ($H_2/HC_{\text{entrée du réacteur de l'étape a)}}$)/($H_2/HC_{\text{entrée du réacteur de l'étape d)}}$) est supérieur ou égal à 1,05, de préférence supérieur à 1,1 et de manière préférée compris entre 1,1 et 6 et préférentiellement compris entre 1,2 et 4.

Le débit d'hydrogène de l'étape d) est généralement tel que le rapport entre le débit d'hydrogène exprimé en normaux $m^3$ par heure ($Nm^3/h$) et le débit de charge à traiter exprimé en $m^3$ par heure aux conditions standards est compris entre 40 et 250 $Nm^3/m^3$, et de manière particulièrement préférée compris entre 50 et 150 $Nm^3/m^3$.

L'hydrogène nécessaire à cette étape peut être de l'hydrogène frais ou de l'hydrogène recyclé, de préférence débarrassé de l'$H_2S$, ou un mélange d'hydrogène frais et recyclé. De préférence, on utilisera de l'hydrogène frais. Ceci permet de diminuer la pression partielle d'$H_2S$ en entrée de l'étape d) et favorise donc l'élimination des mercaptans en oléfines et $H_2S$.

Selon un mode de réalisation, l'hydrogène peut provenir d'une alimentation d'hydrogène dédiée à cette étape, par exemple un compresseur d'hydrogène.

Selon un autre mode de réalisation, et grâce au rapport débit $H_2$/débit charge nécessaire peu élevé dans l'étape d), l'hydrogène peut provenir de l'alimentation d'hydrogène de l'étape a) ce qui permet d'économiser un compresseur d'hydrogène.

Les catalyseurs d'hydrodésulfuration adaptés pour cette étape d) sont des catalyseurs présentant une bonne sélectivité vis-à-vis des réactions d'hydrodésulfuration par rapport à la réaction d'hydrogénation des oléfines dans des conditions opératoires douces. Le catalyseur comprend un support d'oxyde et une phase active comprenant un métal du groupe VIB et un métal du groupe VIII ou une phase active constituée d'au moins un métal du groupe VIII.

Selon une première variante, le catalyseur comprend un support d'oxyde et une phase active comprenant un métal du groupe VIB et un métal du groupe VIII. Selon cette variante, le catalyseur d'hydrodésulfuration de l'étape d) est un catalyseur tel que le catalyseur décrit pour l'étape d'hydrodésulfuration a). Le catalyseur de l'étape d) peut être identique ou différent du catalyseur de l'étape a). De préférence, le catalyseur de l'étape d) ne comprend pas de phosphore. En effet, le présence de phosphore dans le catalyseur, connu pour entre autres stabiliser le support à haute température n'est pas obligatoire dans les conditions opératoires douces de l'étape d).

Un mode de réalisation très préféré de l'invention correspond à la mise en œuvre pour l'étape d) d'un catalyseur étant constitué d'alumine et d'une phase active cobalt-molybdène, ledit catalyseur contenant une teneur en poids par rapport au poids total de catalyseur d'oxyde de cobalt, sous forme CoO, comprise entre 0,1 et 10%, une teneur en poids par rapport au poids total de catalyseur d'oxyde de molybdène, sous forme $MoO_3$, comprise entre 1 et 20%, un rapport molaire cobalt/molybdène compris entre 0,1 et 0,8, ledit catalyseur ayant une surface spécifique entre 30 et 180 $m^2/g$.

Selon une deuxième variante, le catalyseur comprend un support d'oxyde et une phase active constituée d'au moins un métal du groupe VIII. Selon cette variante, le catalyseur d'hydrodésulfuration de l'étape d) est un catalyseur tel que le catalyseur décrit pour l'étape b) d'hydrodésulfuration. Le catalyseur de l'étape d) peut être identique ou différent du catalyseur de l'étape b).

Un mode de réalisation très préféré de l'invention correspond à la mise en œuvre pour l'étape d) d'un catalyseur constitué d'alumine et de nickel, ledit catalyseur contenant une teneur en poids par rapport au poids total de catalyseur d'oxyde de nickel, sous forme NiO, comprise entre 5 et 20%, ledit catalyseur ayant une surface spécifique entre 30 et 180 $m^2/g$.

Le taux d'élimination des mercaptans, est généralement supérieur à 50% et de préférence supérieur à 70% de sorte que le produit issu de l'étape d) contient moins de 10 ppm soufre, et de préférence moins de 5 ppm soufre issus des mercaptans de recombinaison par rapport au poids total de la charge.

Le taux d'hydrogénation des oléfines de l'étape d) est généralement inférieur à 5% et de préférence inférieur à 2%.

Description de la préparation des catalyseurs et de la sulfuration

La préparation des catalyseurs des étapes a), b) ou d) est connue et comprend généralement une étape d'imprégnation des métaux du groupe VIII et du groupe VIB lorsqu'il est présent, et éventuellement du phosphore et/ou du composé organique sur le support d'oxyde, suivie d'un séchage, puis d'une calcination optionnelle permettant d'obtenir la phase active sous leurs formes oxydes. Avant son utilisation dans un procédé d'hydrodésulfuration d'une coupe essence oléfinique contenant du soufre, les catalyseurs sont généralement soumis à une sulfuration afin de former l'espèce active telle que décrite ci-dessous.

L'étape d'imprégnation peut être effectuée soit par imprégnation en slurry, soit par imprégnation en excès, soit par imprégnation à sec, soit par tout autre moyen connu de l'Homme du métier. La solution d'imprégnation est choisie de manière à pouvoir solubiliser les précurseurs de métaux dans les concentrations désirées.

A titre d'exemple, parmi les sources de molybdène, on peut utiliser les oxydes et hydroxydes, les acides

molybdiques et leurs sels en particulier les sels d'ammonium tels que le molybdate d'ammonium, l'heptamolybdate d'ammonium, l'acide phosphomolybdique ($H_3PMo_{12}O_{40}$), et leurs sels, et éventuellement l'acide silicomolybdique ($H_4SiMo_{12}O_{40}$) et ses sels. Les sources de molybdène peuvent être également tout hétéropolycomposé de type Keggin, Keggin lacunaire, Keggin substitué, Dawson, Anderson, Strandberg, par exemple. On utilise de préférence le trioxyde de molybdène et les hétéropolycomposés de type Keggin, Keggin lacunaire, Keggin substitué et Strandberg.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Les précurseurs de cobalt qui peuvent être utilisés sont avantageusement choisis parmi les oxydes, les hydroxydes, les hydroxycarbonates, les carbonates et les nitrates, par exemple. L'hydroxyde de cobalt et le carbonate de cobalt sont utilisés de manière préférée.

Les précurseurs de nickel qui peuvent être utilisés sont avantageusement choisis parmi les oxydes, les hydroxydes, les hydroxycarbonates, les carbonates et les nitrates, par exemple.

Le précurseur de phosphore préféré est l'acide orthophosphorique $H_3PO_4$, mais ses sels et esters comme les phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Après l'étape d'imprégnation, le catalyseur est généralement soumis à une étape de séchage à une température inférieure à 200°C, avantageusement comprise entre 50°C et 180°C, de préférence entre 70°C et 150°C, de manière très préférée entre 75°C et 130°C. L'étape de séchage est préférentiellement réalisée sous une atmosphère inerte ou sous une atmosphère contenant de l'oxygène. L'étape de séchage peut être effectuée par toute technique connue de l'Homme du métier. Elle est avantageusement effectuée à pression atmosphérique ou à pression réduite. De manière préférée, cette étape est réalisée à pression atmosphérique. Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée, le séchage est réalisé en lit traversé en présence d'azote et/ou d'air. De préférence, l'étape de séchage a une durée comprise entre 5 minutes et 15 heures, de préférence entre 30 minutes et 12 heures.

Selon une variante de l'invention, le catalyseur n'a pas subi de calcination lors de sa préparation, c'est-à-dire que le précurseur catalytique imprégné n'a pas été soumis à une étape de traitement thermique à une température supérieure à 200°C sous une atmosphère inerte ou sous une atmosphère contenant de l'oxygène, en présence d'eau ou non.

Selon une autre variante de l'invention, préférée, le catalyseur a subi une étape de calcination lors de sa préparation, c'est-à-dire que le précurseur catalytique imprégné a été soumis à une étape de traitement thermique à une température comprise entre 250 et 1000°C et de préférence entre 200 et 750°C, pendant une durée typiquement comprise entre 15 minutes et 10 heures, sous une atmosphère inerte ou sous une atmosphère contenant de l'oxygène, en présence d'eau ou non.

Avant la mise en contact avec la charge à traiter dans un procédé d'hydrodésulfuration d'essences, les catalyseurs du procédé selon l'invention subissent généralement une étape de sulfuration. La sulfuration est de préférence réalisée en milieu sulforéducteur, c'est-à-dire en présence d'$H_2S$ et d'hydrogène, afin de transformer les oxydes métalliques en sulfures tels que par exemple, le $MoS_2$, le $Co_9S_8$ ou le $Ni_3S_2$. La sulfuration est réalisée en injectant sur le catalyseur un flux contenant de l'$H_2S$ et de l'hydrogène, ou bien un composé soufré susceptible de se décomposer en $H_2S$ en présence du catalyseur et de l'hydrogène. Les polysulfures tel que le diméthyldisulfure (DMDS) sont des précurseurs d'$H_2S$ couramment utilisés pour sulfurer les catalyseurs. Le soufre peut aussi provenir de la charge. La température est ajustée afin que l'$H_2S$ réagisse avec les oxydes métalliques pour former des sulfures métalliques. Cette sulfuration peut être réalisée in situ ou ex situ (en dedans ou dehors du réacteur) du réacteur du procédé selon l'invention à des températures comprises entre 200 et 600°C, et plus préférentiellement entre 300 et 500°C.

Le taux de sulfuration des métaux constituants les catalyseurs est au moins égal à 60%, de préférence au moins égal à 80%. La teneur en soufre dans le catalyseur sulfuré est mesurée par analyse élémentaire selon ASTM D5373. Un métal est considéré comme sulfuré lorsque le taux de sulfuration global défini par le rapport molaire entre le soufre (S) présent sur le catalyseur et ledit métal est au moins égal à 60% du rapport molaire théorique correspondant à la sulfuration totale du(des) métal(aux) considéré(s). Le taux de sulfuration global est défini par l'équation suivante :

$$(S/\text{métal})_{\text{catalyseur}} \geq 0{,}6 \times (S/\text{métal})_{\text{théorique}}$$

dans laquelle :

(S/métal)$_{catalyseur}$ est le rapport molaire entre le soufre (S) et du métal présents sur le catalyseur
(S/métal)$_{théorique}$ est le rapport molaire entre le soufre et du métal correspondant à la sulfuration totale du métal en sulfure.

Ce rapport molaire théorique varie selon le métal considéré :

$$(S/Fe)_{théorique} = 1$$

$$(S/Co)_{théorique} = 8/9$$

$$(S/Ni)_{théorique} = 2/3$$

$$(S/Mo)_{théorique} = 2/1$$

$$(S/W)_{théorique} = 2/1$$

Lorsque le catalyseur comprend plusieurs métaux, le rapport molaire entre le S présent sur le catalyseur et l'ensemble des métaux doit également être au moins égal à 60% du rapport molaire théorique correspondant à la sulfuration totale de chaque métal en sulfure, le calcul étant effectué au prorata des fractions molaires relatives de chaque métal.

Par exemple, pour un catalyseur comprenant du molybdène et du nickel avec une fraction molaire respective de 0,7 et 0,3, le rapport molaire minimal (S/ Mo + Ni) est donné par la relation:

$$(S/Mo+Ni)_{catalyseur} = 0{,}6 \times \{(0{,}7 \times 2) + (0{,}3 \times (2/3)\}$$

**Description de l'étape de séparation de l'$H_2S$ (étape e)**

A l'issue de l'étape d), l'essence traitée dans les conditions énoncées ci-dessus présente donc une teneur réduite en mercaptans. En effet ces derniers ont été convertis par hydrodésulfuration en formant de l'$H_2S$.

Conformément à l'invention, on procède à une étape de séparation e) de l'$H_2S$ formé et présent dans l'effluent issu de l'étape d). Toute méthode connue de l'homme du métier peut être envisagée.

Selon un premier mode de réalisation, après l'étape d'hydrodésulfuration d), l'effluent est refroidi à une température généralement inférieure à 80°C et de préférence inférieure à 60°C afin de condenser les hydrocarbures. Les phases gaz et liquide sont ensuite séparées dans un ballon de séparation. La fraction liquide qui contient l'essence désulfurée ainsi qu'une fraction de l'$H_2S$ dissous est envoyée vers une colonne de stabilisation ou débutaniseur. Cette colonne sépare une coupe de tête essentiellement constituée d'$H_2S$ résiduel et de composés hydrocarbures ayant une température d'ébullition inférieure ou égale à celle du butane et une coupe de fond débarrassée de l'$H_2S$, appelée essence stabilisée, contenant les composés ayant une température d'ébullition supérieure à celle du butane.

Selon un deuxième mode de réalisation, après l'étape de condensation, la fraction liquide qui contient l'essence désulfurée ainsi qu'une fraction de l'$H_2S$ dissous est envoyée vers une section de stripage, tandis que la fraction gazeuse constituée principalement d'hydrogène et de $H_2S$ est envoyée vers une section de purification. Le stripage peut être réalisé en chauffant la fraction hydrocarbonée seule ou avec une injection d'hydrogène ou de vapeur d'eau, dans une colonne de distillation afin d'extraire, en tête les composés légers qui ont été entraînés par dissolution dans la fraction liquide ainsi que l'$H_2S$ résiduel dissous. La température de l'essence strippée récupérée en fond de colonne est généralement comprise entre 120°C et 250°C.

De préférence, l'étape de séparation e) est effectuée dans une colonne de stabilisation ou débutaniseur. En effet, une colonne de stabilisation permet de séparer l'$H_2S$ plus efficacement qu'une section de stripage.

L'étape e) est de préférence mise en œuvre afin que le soufre sous forme d'$H_2S$ restant dans l'effluent de l'étape d) représente moins de 30%, de préférence moins de 20% et de manière plus préférée moins de 10% du soufre total présent dans la fraction hydrocarbonée traitée.

Il est à noter que l'étape d'hydrodésulfuration d) et l'étape de séparation e) de l'$H_2S$ peuvent être conduites de manière simultanée au moyen d'une colonne catalytique équipée d'un lit catalytique contenant le catalyseur d'hydrodésulfuration. De préférence, la colonne de distillation catalytique comporte deux lits de catalyseur d'hydrodésulfuration et l'effluent de l'étape c) est envoyé dans la colonne entre les deux lits de catalyseur.

**Schémas pouvant être mis en œuvre dans le cadre de l'invention**

Différents schémas peuvent être mis en œuvre afin de produire, à moindre coût, une essence désulfurée et à teneur réduite en mercaptans. Le choix du schéma optimal dépend en fait des caractéristiques des essences à traiter et à produire ainsi que des contraintes propres à chaque raffinerie.

Les schémas décrits ci-dessous sont donnés à titre d'illustration de manière non limitative.

Selon une première variante, on procède à une étape de distillation de l'essence à traiter afin de séparer deux coupes (ou fractions), à savoir une coupe légère et une coupe lourde et on traite la coupe lourde selon le procédé de l'invention. La coupe légère a généralement une gamme de température d'ébullition inférieure à 100°C et la coupe lourde une gamme de température supérieure à 65°C. Cette première variante présente l'avantage de ne pas hydrotraiter la coupe légère qui est riche en oléfines et généralement pauvre en soufre, ce qui permet de limiter la perte d'octane par hydrogénation des oléfines.

Selon une deuxième variante, l'essence à traiter est soumise avant le procédé selon l'invention à une étape préalable consistant en une hydrogénation sélective des dioléfines présentes dans la charge, comme décrite dans la demande de brevet EP 1077247.

L'essence à traiter est préalablement traitée en présence d'hydrogène et d'un catalyseur d'hydrogénation sélective de manière à hydrogéner au moins partiellement les dioléfines et réaliser une réaction d'alourdissement d'une partie des composés mercaptans légers (RSH) présents dans la charge en thioéthers, par réaction avec des oléfines.

A cette fin, l'essence à traiter est envoyée dans un réacteur catalytique d'hydrogénation sélective contenant au moins un lit fixe ou mobile de catalyseur d'hydrogénation sélective des dioléfines et d'alourdissement des mercaptans légers. La réaction d'hydrogénation sélective des dioléfines et d'alourdissement des mercaptans légers s'effectue préférentiellement sur un catalyseur sulfuré comprenant au moins un élément du groupe VIII et éventuellement au moins un élément du groupe VIB et un support d'oxyde. L'élément du groupe VIII est choisi de préférence parmi le nickel et le cobalt et en particulier le nickel. L'élément du groupe VIB, lorsqu'il est présent, est de préférence choisi parmi le molybdène et le tungstène et de manière très préférée le molybdène.

Le support d'oxyde du catalyseur est de préférence choisi parmi l'alumine, l'aluminate de nickel, la silice, le carbure de silicium, ou un mélange de ces oxydes. On utilise, de manière préférée, de l'alumine et de manière encore plus préférée, de l'alumine de haute pureté. Selon un mode de réalisation préféré le catalyseur d'hydrogénation sélective contient du nickel à une teneur en poids d'oxyde de nickel, sous forme NiO, comprise entre 1 et 12%, et du molybdène à une teneur en poids d'oxyde de molybdène, sous forme $MoO_3$, comprise entre 6% et 18% et un rapport molaire nickel/molybdène compris entre 0,3 et 2,5, les métaux étant déposés sur un support constitué d'alumine. Le taux de sulfuration des métaux constituant le catalyseur est, de manière préférée, supérieur à 60%.

Lors de l'étape optionnelle d'hydrogénation sélective, l'essence est mise en contact avec le catalyseur à une température comprise entre 50 et 250°C, et de préférence entre 80 et 220°C, et de manière encore plus préférée entre 90 et 200°C, avec une vitesse spatiale liquide (LHSV) comprise entre 0,5 $h^{-1}$ et 20 $h^{-1}$, l'unité de la vitesse spatiale liquide étant le litre de charge par litre de catalyseur et par heure (L/L/h). La pression est comprise entre 0,4 et 5 MPa, de préférence entre 0,6 et 4 MPa et de manière encore plus préférée entre 1 et 3 MPa. L'étape optionnelle d'hydrogénation sélective est typiquement réalisée avec un rapport entre le débit d'hydrogène exprimé en normaux $m^3$ par heure et le débit de charge à traiter exprimé en $m^3$ par heure aux conditions standards compris entre 2 et 100 $Nm^3/m^3$, de manière préférée entre 3 et 30 $Nm^3/m^3$.

Après hydrogénation sélective, la teneur en dioléfines, déterminée par l'intermédiaire de l'indice d'anhydride maléique (MAV ou Maleic Anhydride Value selon la terminologie anglo-saxonne), selon la méthode UOP 326, est généralement réduite à moins de 6 mg anhydride maleïque/g, voire moins de 4 mgAM/g et de manière plus préférée moins de 2 mg AM/g. Dans certains cas, il peut être obtenu moins de 1 mg AM/g.

L'essence hydrogénée sélectivement est ensuite distillée en au moins deux coupes, une coupe légère et une coupe lourde et éventuellement une coupe intermédiaire. Dans le cas du fractionnement en deux coupes, on traite la coupe lourde selon le procédé de l'invention. Dans le cas du fractionnement en trois coupes, les coupes intermédiaire et lourde peuvent être traitées séparément par le procédé selon l'invention.

Il est à noter qu'il est envisageable de réaliser les étapes d'hydrogénation des dioléfines et de fractionnement en deux ou trois coupes simultanément au moyen d'une colonne de distillation catalytique qui inclut une colonne de distillation équipée d'au moins un lit catalytique.

D'autres caractéristiques et avantages de l'invention vont apparaître maintenant à la lecture de la description qui va suivre, donnée à titre uniquement illustratif et non limitatif, et en référence à la figure 1 annexée.

En référence à la figure 1 et selon un mode de réalisation du procédé selon l'invention, on envoie par la ligne 1 l'essence à traiter et de l'hydrogène par la ligne 3 dans une unité d'hydrogénation sélective 2 (étape optionnelle) afin

d'hydrogéner sélectivement les dioléfines et d'alourdir les mercaptans légers. L'effluent à basse teneur en dioléfines et mercaptans est soutiré du réacteur 2 par la ligne 4 et est envoyé, dans une colonne de fractionnement 5 (ou splitter selon la terminologie anglo-saxonne) configurée pour séparer l'essence en deux coupes : une coupe essence légère 6 (ou essence légère) et une (première) coupe essence lourde 7 qui est constituée par la fraction lourde complémentaire de l'essence légère. Le point de coupe de la coupe légère est généralement effectué à une température inférieure à 100°C, et le point de coupe de la coupe lourde est généralement effectué à une température supérieure à 65°C. Le point d'ébullition final de la coupe légère est choisi de manière à fournir une coupe essence légère à basse teneur en soufre (teneur en soufre total typiquement inférieure à 30 ppm poids et de préférence inférieure à 10 ppm poids) sans nécessiter une étape d'hydrodésulfuration ultérieure.

On envoie ensuite par la ligne 7 la coupe essence lourde et de l'hydrogène par la ligne 8 dans l'unité d'hydrodésulfuration 9 de l'étape a). L'unité d'hydrodésulfuration 9 de l'étape a) est par exemple un réacteur contenant un catalyseur d'hydrodésulfuration supporté à base d'un métal du groupe VIII et VIB en lit fixe ou en lit fluidisé, de préférence on utilise un réacteur en lit fixe. Le réacteur est opéré dans des conditions opératoires et en présence d'un catalyseur d'hydrodésulfuration, comme décrit plus haut pour décomposer les composés soufrés et former du sulfure d'hydrogène ($H_2S$). Lors de l'hydrodésulfuration dans l'étape a), des mercaptans de recombinaison se forment par addition d'$H_2S$ formé sur les oléfines. L'effluent de l'unité d'hydrodésulfuration 9 est ensuite introduit dans l'unité d'hydrodésulfuration dite de finition 11 par la ligne 10 sans élimination de l'$H_2S$ formé. L'unité d'hydrodésulfuration 11 de l'étape b) est par exemple un réacteur contenant un catalyseur d'hydrodésulfuration en lit fixe ou en lit fluidisé, de préférence on utilise un réacteur en lit fixe.

L'unité 11 est opérée à une température plus élevée que l'unité 9 et en présence d'un catalyseur sélectif comprenant un support d'oxyde et une phase active constituée d'au moins un métal du groupe VIII pour décomposer au moins en partie les mercaptans de recombinaison en oléfines et en $H_2S$. Elle permet également d'hydrodésulfurer les composés soufrés plus réfractaires.

On soutire dudit réacteur d'hydrodésulfuration 11 par la ligne 12 un effluent (essence) contenant de l'$H_2S$. L'effluent subi ensuite une étape d'élimination de l'$H_2S$ (étape c) qui consiste, dans le mode de réalisation de la figure 1, à traiter l'effluent par condensation en introduisant l'effluent de l'étape b) via la ligne 12 dans un ballon de séparation 13 afin de soutirer une phase gaz contenant de l'$H_2S$ et de l'hydrogène via la ligne 14 et une fraction liquide. La fraction liquide qui contient l'essence désulfurée ainsi qu'une fraction de l'$H_2S$ dissous est envoyée via la ligne 15 vers une colonne de stabilisation ou débutaniseur 16 afin de séparer en tête de la colonne via la ligne 17 un flux contenant des hydrocarbures en C4- et l'$H_2S$ résiduel et en fond via la ligne 18 de la colonne une essence dite stabilisée contenant les composés ayant une température d'ébullition supérieure à celle du butane.

L'essence stabilisée est envoyée par la ligne 18 dans une unité d'hydrodésulfuration 19 de l'étape d) afin de réduire la teneur en mercaptans résiduels de l'essence stabilisée par hydrodésulfuration dans des conditions opératoires douces. Comme précisé ci-avant, l'unité 19 met en œuvre des conditions opératoires douces, notamment un rapport débit $H_2$/débit charge faible, en présence d'un catalyseur d'hydrodésulfuration adapté. L'hydrogène frais peut être apporté par la ligne 20. Grace au rapport débit $H_2$/débit charge nécessaire peu élevé dans l'étape d), l'hydrogène nécessaire pour l'étape d) dans l'unité 19 peut également être soutiré directement de l'alimentation d'hydrogène de l'unité 9 par la ligne 21. Ceci permet d'économiser un compresseur d'hydrogène.

L'effluent de l'étape d) subi ensuite une étape d'élimination de l'$H_2S$ (étape e) qui consiste, dans le mode de réalisation de la figure 1, à traiter l'effluent par condensation en introduisant l'effluent de l'étape d) via la ligne 22 dans un ballon de séparation 23 afin de soutirer une phase gaz contenant de l'$H_2S$ et de l'hydrogène via la ligne 24 et une fraction liquide via la ligne 25. La fraction liquide qui contient l'essence désulfurée ainsi qu'une fraction de l'$H_2S$ dissous est envoyée via la ligne 25 vers une colonne de stabilisation ou débutaniseur 26 afin de séparer en tête de la colonne via la ligne 27 un flux contenant des hydrocarbures en C4- et l'$H_2S$ résiduel et en fond de la colonne via la ligne 28 une essence qui présente des teneurs en mercaptans et en soufre total respectivement inférieures à 5 ppm poids et 10 ppm poids.

## Exemples

### Exemple 1 : Prétraitement de la charge essence de FCC par hydrogénation sélective (selon l'art antérieur)

Le Tableau 1 donne les caractéristiques d'une essence de FCC traitée par le procédé selon la Figure 2 de l'art antérieur (EP1077247).

L'essence de FCC (ligne 1) est traitée dans le réacteur d'hydrogénation sélective 2 en présence d'un catalyseur A (étape optionnelle). Le catalyseur A est un catalyseur de type NiMo sur alumine gamma. Les teneurs en métaux sont respectivement 7% poids NiO et 11% poids $MoO_3$ par rapport au poids total du catalyseur, soit un rapport molaire Ni/Mo de 1,2. La surface spécifique du catalyseur est de 230 $m^2/g$. Préalablement à son utilisation, le catalyseur A est sulfuré à pression atmosphérique en banc de sulfuration sous mélange $H_2S/H_2$ constitué de 15% volumique d'$H_2S$ à 1 L/g·h de catalyseur et à 400°C durant deux heures. Ce protocole permet d'obtenir un taux de sulfuration supérieur à 80%.

L'essence (ligne 1) est mise en contact avec de l'hydrogène (ligne 3) dans un réacteur qui contient le catalyseur A. Cette étape du procédé réalise l'hydrogénation sélective des dioléfines et la conversion (alourdissement) d'une partie des composés mercaptans légers (RSH) présents dans la charge. La teneur en dioléfines est directement proportionnelle à la valeur de la MAV (indice d'anhydride maléique ou Maleic Anhydrid Value selon la terminologie anglo-saxonne). Les dioléfines sont des composés indésirables car ils sont des précurseurs de gommes dans les essences.

Les conditions opératoires mises en œuvre dans le réacteur d'hydrogénation sélective sont : Température : 140°C, Pression totale : 2,5 MPa, rapport volumique $H_2$ ajouté/charge essence : 5 normaux litres d'hydrogène par litre d'essence aux conditions standard (vol/vol), vitesse volumique horaire (VVH) : 3 $h^{-1}$.

Tableau 1 : Caractéristiques de la charge (1) et de l'effluent d'hydrogénation sélective (4).

| | | Ligne 1 Charge | Ligne 4 Effluent d'hydrogénation sélective |
|---|---|---|---|
| Teneur en soufre organique | (ppm poids S) | 438 | 435 |
| MAV | (mg/g) | 12 | 0,6 |
| Teneur en oléfines | (% poids) | 31% | 31% |
| Distillation simulée (ASTM D2887) | | | |
| 5% masse distillée | (°C) | 23 | 23 |
| 50% masse distillée | (°C) | 95 | 95 |
| 95% masse distillée | (°C) | 180 | 180 |

L'effluent de l'étape d'hydrogénation sélective (ligne 4) à faible teneur en dioléfines conjuguées (MAV=0,6 mg/g) et faible teneur en composés soufrés légers (alourdis dans l'étape d'hydrogénation sélective) est envoyé dans une colonne de fractionnement (5) afin de séparer en tête une essence légère (ligne 6) et en fond de la colonne une première coupe essence lourde (ligne 7). Les caractéristiques de l'essence légère et de la première coupe essence lourde sont indiquées dans le Tableau 2. Comme indiqué dans le tableau 2, l'essence légère obtenue (ligne 6) a une faible teneur en soufre (10 ppm poids). La première coupe essence lourde qui correspond à environ 72 % massique de l'essence, a une teneur élevée en soufre (600 ppm) et nécessite un traitement supplémentaire avant d'être incorporée au pool essence.

Tableau 2 : Caractéristiques des coupes : Essence légère et première coupe essence lourde

| | | Ligne 6 Essence légère | Ligne 7 Essence lourde |
|---|---|---|---|
| Pourcentage massique de la coupe | % | 28 | 72 |
| Teneur en soufre organique | (ppm poids S) | 10 | 600 |
| Teneur en oléfines | (% poids) | 46% | 25% |

**Exemple 2 (comparatif selon l'art antérieur) : Hydrodésulfuration de la première coupe essence lourde**

Cet exemple fait référence à l'art antérieur (EP1077247) et à la figure 2. La première coupe essence lourde (ligne 7) obtenue dans l'exemple 1 est mélangée avec de l'hydrogène (ligne 8) et traitée dans une unité d'hydrodésulfuration sélective (9) qui correspond à une première étape d'hydrodésulfuration. La première étape d'hydrodésulfuration est conduite en présence d'un catalyseur CoMo supporté sur alumine. La température est de 268°C, la pression est de 2 MPa, la vitesse spatiale du liquide (exprimée en volume de liquide par volume de catalyseur et par heure) est de 3 $h^{-1}$, le rapport entre le débit d'hydrogène et le débit de charge est de 250 normaux $m^3$ par $m^3$ dans les conditions standards. L'effluent du réacteur (ligne 10) est ensuite réchauffé dans un four (non représenté sur la figure) puis introduit dans un deuxième réacteur (11) contenant un catalyseur dit de finition. Cette étape de finition est conduite en présence d'un catalyseur Ni supporté sur alumine. La température est de 316°C, la pression est de 1,8 MPa, la vitesse spatiale du liquide (exprimée en volume de liquide par volume de catalyseur et par heure) est de 3 $h^{-1}$.

L'effluent du réacteur 11 (ligne 12) est envoyé dans un ballon de séparation (13) afin de séparer une phase gaz contenant de l'$H_2S$ et de l'hydrogène via la ligne 14 et une fraction liquide. La fraction liquide qui contient l'essence désulfurée ainsi qu'une fraction de l'$H_2S$ dissous est envoyée via la ligne 15 vers une colonne de stabilisation ou débutaniseur (16) afin de séparer en tête de la colonne via la ligne 17 un flux contenant des hydrocarbures en C4- et l'$H_2S$ résiduel et en fond de la colonne, via la ligne 18, une essence lourde dite stabilisée issue du deuxième réacteur (11), et dont les caractéristiques sont illustrées dans le Tableau 3. La perte d'oléfines est présentée dans le Tableau 4.

Tableau 3 : Caractéristiques de l'essence lourde après la première et la deuxième étape d'hydrodésulfuration

| | | Ligne 10 Essence lourde hydrodésulfurée Première étape | Ligne 12 Essence lourde hydrodésulfurée Deuxième étape |
|---|---|---|---|
| Teneur en soufre organique | (ppm S) | 21 | 10 |
| Teneur en oléfines | (% poids) | 18,2 | 18,2 |

Tableau 4 : Perte d'oléfines entre la première coupe essence lourde (ligne 7) et l'essence obtenue après la deuxième étape d'hydrodésulfuration (ligne 12)

| | | Perte d'oléfines (absolue) |
|---|---|---|
| Perte d'oléfines | (% poids) | 27,3 |

Le procédé selon l'exemple 2 permet d'obtenir, une essence lourde à basse teneur en soufre (10 ppm poids). La perte d'oléfines entre la première coupe essence lourde et l'essence lourde stabilisée obtenue après la deuxième étape d'hydrodésulfuration est de 27,3% massique (en absolu).

**Exemple 3: (selon la présente invention)**

Cet exemple fait référence à la présente invention, selon la Figure 1. La première coupe essence lourde (ligne 7) obtenue dans l'exemple 1 est mélangée avec de l'hydrogène et traitée dans une unité d'hydrodésulfuration sélective (9) qui correspond à l'étape a) de la présente invention.

La première étape d'hydrodésulfuration (étape a)) est conduite en présence d'un catalyseur CoMo supporté sur alumine. La température est de 260°C, la pression est de 2 MPa, la vitesse spatiale du liquide (exprimée en volume de liquide par volume de catalyseur et par heure) est de 3 $h^{-1}$, le rapport entre le débit d'hydrogène et le débit de charge est de 200 normaux $m^3$ par $m^3$ dans les conditions standards. L'effluent du réacteur (ligne 10) est ensuite réchauffé dans un four (non représenté sur la figure) puis introduit dans un deuxième réacteur (11) contenant un catalyseur dit de finition, correspondant à l'étape b). Cette étape d'hydrodésulfuration sélective est effectuée en présence d'un catalyseur Ni supporté sur alumine. La température est de 306°C, la pression est de 1,8 MPa, la vitesse spatiale du liquide (exprimée en volume de liquide par volume de catalyseur et par heure) est de 3 $h^{-1}$.

Les caractéristiques de l'essence lourde obtenue après l'étape b) de la présente invention sont illustrées dans le Tableau 5. La perte d'oléfines après l'étape b) est présentée dans le Tableau 6.

Tableau 5 : Caractéristiques de l'essence lourde après l'étape b) d'hydrodésulfuration selon l'invention

| | | Ligne 12 Essence lourde hydrodésulfurée après l'étape b) (selon l'invention) |
|---|---|---|
| Teneur en soufre organique | (ppm S) | 19 |
| Teneur en soufre RSH | (ppm S) | 10 |
| Teneur en oléfines | (% poids) | 19,5 |

Tableau 6 : Perte d'oléfines entre la première coupe essence lourde (ligne 7) et l'essence lourde (ligne 12) obtenue après l'étape b) selon l'invention

| | | Perte d'oléfines (absolue) |
|---|---|---|
| Perte d'oléfines | (% poids) | 22 |

Les conditions de l'étape b) sont moins sévères que dans l'exemple 2 : la perte en oléfines à l'issue de l'étape b) est réduite de 5,3 % poids dans cet exemple selon l'invention.

Dans l'étape c) selon l'invention, on effectue une étape d'élimination de l'$H_2S$ présent dans l'effluent de l'étape b).

L'effluent du réacteur (11) est partiellement condensé pour être introduit dans le séparateur gaz/liquide (13). La phase gaz produite (ligne 14) contient essentiellement l'hydrogène et l'$H_2S$, éventuellement avec des hydrocarbures légers. Le fond du séparateur contient une coupe hydrocarbure lourde partiellement désulfurée. Après condensation de l'effluent de l'étape b) (ligne 15), la séparation est effectuée dans une colonne de stabilisation (16) de façon à produire une coupe essence lourde stabilisée (ligne 18) et une phase gaz contenant des hydrocarbures en C4- et l'$H_2S$ résiduel (ligne

17).

Les caractéristiques de la coupe lourde stabilisée obtenue après l'étape c) de la présente invention sont illustrées dans le Tableau 7.

Tableau 7 : Caractéristiques de l'essence lourde stabilisée (ligne 18) après l'étape c) selon l'invention

| | | Ligne 18 essence lourde stabilisée |
|---|---|---|
| Teneur en $H_2S$ | (ppm poids) | 0 |
| Teneur en soufre organique | (ppm poids S) | 19 |
| Teneur en soufre RSH | (ppm poids S) | 10 |

Dans l'étape d) selon l'invention la coupe essence lourde stabilisée appauvrie en $H_2S$ est mise en contact dans le réacteur d'hydrodésulfuration (19) avec de l'hydrogène et en présence d'un catalyseur Ni supporté sur alumine dit de finition. La température est de 240°C, la pression est de 2 MPa, la vitesse spatiale du liquide (exprimée en volume de liquide par volume de catalyseur et par heure) est de 3 $h^{-1}$. Le rapport entre le débit d'hydrogène exprimé en normaux $m^3$ par heure et le débit de la charge à traiter exprimé en $m^3$ par heure aux conditions standards est inférieur à celui de l'étape a), soit de 80 $Nm^3/m^3$. Dans ces conditions de fonctionnement, l'hydrogénation des oléfines est négligeable.

Les caractéristiques de l'effluent (22) obtenu après l'étape d) de la présente invention sont illustrées dans le Tableau 8.

Tableau 8 : Caractéristiques de l'essence lourde (ligne 22) après l'étape d) d'hydrodésulfuration selon l'invention

| | | Ligne 22 Essence lourde hydrodésulfurée après l'étape d) selon l'invention |
|---|---|---|
| Teneur en soufre organique | (ppm S) | 10 |
| Teneur en soufre RSH | (ppm S) | 1 |

La coupe lourde désulfurée (ligne 22) est envoyée, via un ballon de séparation (23) vers une colonne de stabilisation (26), afin de récupérer en tête de la colonne l'hydrogène et l'$H_2S$ (ligne 27) éventuellement avec des hydrocarbures légers et en fond de la colonne (ligne 28) une coupe hydrocarbure désulfurée (étape e). Les caractéristiques de la coupe essence lourde obtenue après stabilisation (28) de la présente invention sont illustrées dans les Tableaux 9 et 10.

Tableau 9 : Caractéristiques de l'essence lourde stabilisée (ligne 28) après l'étape e) selon l'invention

| | | Ligne 28 Essence lourde stabilisée selon l'invention |
|---|---|---|
| Teneur en soufre organique | (ppm S) | 10 |
| Teneur en soufre RSH | (ppm S) | 1 |
| Teneur en oléfines | (% poids) | 19,7 |

Tableau 10 : Perte d'oléfines entre la première coupe essence lourde (ligne 7) et l'essence lourde stabilisée (ligne 28) après l'étape e)

| | | Perte d'oléfines Essence lourde selon l'invention (absolue) |
|---|---|---|
| Perte d'oléfines | (% poids) | 21,2 |

De manière très avantageuse, le procédé selon l'invention permet de produire une essence à faible teneur en soufre (10 ppm S) tout en diminuant la perte absolue d'oléfines par comparaison à l'essence lourde désulfurée après la deuxième étape de désulfuration (présentée dans l'exemple 2 comparatif).

En effet dans l'exemple 2 la perte d'oléfines (en % massique) entre la première coupe essence lourde (7) et l'essence obtenue après la deuxième étape d'hydrodésulfuration (12) est de 6,8% et dans l'exemple 3 selon l'invention la perte d'oléfines entre la première coupe essence lourde (7) l'essence lourde désulfurée et stabilisée (28) est de 5,5%. Ainsi, l'exemple 3 selon l'invention permet de faire préserver 19% relatif des oléfines présentes dans la première coupe essence lourde (7) tout en produisant une essence à même basse teneur en soufre (10 ppm). La préservation des oléfines

a un impact positif sur les indices d'octane de l'essence produite.

Le procédé selon l'invention permet ainsi d'obtenir, après stabilisation une coupe essence lourde à basse teneur en soufre organique (10 ppm) avec très peu de mercaptans. Cette essence peut, avec l'essence légère obtenue dans l'exemple 1, être valorisée dans le pool essence pour la formulation de carburant pour véhicules.

**Revendications**

1. Procédé de traitement d'une essence contenant des composés soufrés, des oléfines et des dioléfines, le procédé comprenant au moins les étapes suivantes :

   a) on met en contact dans au moins un réacteur, l'essence, de l'hydrogène et un catalyseur d'hydrodésulfuration comprenant un support d'oxyde et une phase active comprenant un métal du groupe VIB et un métal du groupe VIII, à une température comprise entre 210 et 320° C, à une pression comprise entre 1 et 4 MPa, avec une vitesse spatiale comprise entre 1 et 10 $h^{-1}$ et un rapport entre le débit d'hydrogène exprimé en normaux $m^3$ par heure et le débit de charge à traiter exprimé en $m^3$ par heure aux conditions standards compris entre 100 et 600 $Nm^3/m^3$, de manière à convertir au moins une partie des composés soufrés en $H_2S$,
   b) on met en contact dans au moins un réacteur, l'effluent issu de l'étape a) sans élimination de l'$H_2S$ formé, de l'hydrogène et un catalyseur d'hydrodésulfuration comprenant un support d'oxyde et une phase active constituée d'au moins un métal du groupe VIII, à une température comprise entre 280 et 400° C, à une pression comprise entre 0,5 et 5 MPa, avec une vitesse spatiale comprise entre 1 et 10 $h^{-1}$ et un rapport entre le débit d'hydrogène exprimé en normaux $m^3$ par heure et le débit de charge à traiter exprimé en $m^3$ par heure aux conditions standards compris entre 100 et 600 $Nm^3/m^3$, ladite température de l'étape b) étant plus élevée que la température de l'étape a),
   c) on effectue une étape de séparation de l'$H_2S$ formé et présent dans l'effluent issu de l'étape b),
   d) on met en contact, dans au moins un réacteur, l'effluent appauvri en $H_2S$ issu de l'étape c), de l'hydrogène et un catalyseur d'hydrodésulfuration comprenant un support d'oxyde et une phase active comprenant un métal du groupe VIB et un métal du groupe VIII ou une phase active constituée d'au moins un métal du groupe VIII, à une température comprise entre 150 et 330° C, à une pression comprise entre 0,5 et 5 MPa, avec une vitesse spatiale comprise entre 0,5 et 10 $h^{-1}$ et un rapport entre le débit d'hydrogène et le débit de charge à traiter inférieur à celui de l'étape a), ledit rapport entre le débit d'hydrogène exprimé en normaux $m^3$ par heure et le débit de charge à traiter exprimé en $m^3$ par heure aux conditions standards compris entre 40 et 250 $Nm^3/m^3$.
   e) on effectue une étape de séparation de l'$H_2S$ formé et présent dans l'effluent issu de l'étape d).

2. Procédé selon la revendication 1, dans lequel le catalyseur de l'étape a) comprend de l'alumine et une phase active comprenant du cobalt, du molybdène et éventuellement du phosphore, ledit catalyseur contenant une teneur en poids par rapport au poids total de catalyseur d'oxyde de cobalt, sous forme CoO, comprise entre 0,1 et 10%, une teneur en poids par rapport au poids total de catalyseur d'oxyde de molybdène, sous forme $MoO_3$, comprise entre 1 et 20%, un rapport molaire cobalt/molybdène compris entre 0,1 et 0,8, une teneur en poids par rapport au poids total de catalyseur d'oxyde de phosphore sous forme $P_2O_5$ comprise entre 0,3 et 10% lorsque le phosphore est présent, ledit catalyseur ayant une surface spécifique entre 30 et 180 $m^2/g$.

3. Procédé selon l'une des revendications précédentes, dans lequel le catalyseur de l'étape b) est constitué d'alumine et de nickel, ledit catalyseur contenant une teneur en poids par rapport au poids total de catalyseur d'oxyde de nickel, sous forme NiO, comprise entre 5 et 20%, ledit catalyseur ayant une surface spécifique entre 30 et 180 $m^2/g$.

4. Procédé selon l'une des revendications précédentes, dans lequel le catalyseur de l'étape d) est constitué d'alumine et d'une phase active cobalt-molybdène, ledit catalyseur contenant une teneur en poids par rapport au poids total de catalyseur d'oxyde de cobalt, sous forme CoO, comprise entre 0,1 et 10%, une teneur en poids par rapport au poids total de catalyseur d'oxyde de molybdène, sous forme $MoO_3$, comprise entre 1 et 20%, un rapport molaire cobalt/molybdène compris entre 0,1 et 0,8, ledit catalyseur ayant une surface spécifique entre 30 et 180 $m^2/g$.

5. Procédé selon l'une des revendications 1 à 3, dans lequel le catalyseur de l'étape d) est constitué d'alumine et de nickel, ledit catalyseur contenant une teneur en poids par rapport au poids total de catalyseur d'oxyde de nickel, sous forme NiO, comprise entre 5 et 20%, ledit catalyseur ayant une surface spécifique entre 30 et 180 $m^2/g$.

6. Procédé selon l'une des revendications précédentes, dans lequel la température de l'étape b) est supérieure d'au moins 5° C à la température de l'étape a).

7. Procédé selon l'une des revendications précédentes, dans lequel la température de l'étape d) est inférieure d'au moins 5° C à la température de l'étape b).

8. Procédé selon l'une des revendications précédentes, dans lequel le ratio rapport entre le débit d'hydrogène et le débit de charge à traiter à l'entrée du réacteur de l'étape a)/ rapport entre le débit d'hydrogène et le débit de charge à traiter à l'entrée du réacteur de l'étape d) est supérieur ou égal à 1,05.

9. Procédé selon l'une des revendications précédentes, dans lequel les étapes de séparation c) et e) sont effectuées dans un débutaniseur ou une section de stripage.

10. Procédé selon l'une des revendications précédentes, dans lequel avant l'étape a) on effectue une étape de distillation de l'essence de manière à fractionner ladite essence en au moins deux coupes essence légère et lourde et on traite la coupe essence lourde dans les étapes a), b), c), d) et e).

11. Procédé selon l'une des revendications précédentes, dans lequel avant l'étape a) et avant toute éventuelle étape de distillation, on met en contact l'essence avec de l'hydrogène et un catalyseur d'hydrogénation sélective pour hydrogéner sélectivement les dioléfines contenues dans ladite l'essence en oléfines.

12. Procédé selon l'une des revendications précédentes, dans lequel l'essence est une essence de craquage catalytique.

**Patentansprüche**

1. Verfahren zur Behandlung eines Benzins, das schwefelhaltige Verbindungen, Olefine und Diolefine enthält, wobei das Verfahren mindestens die folgenden Schritte umfasst:

a) Inkontaktbringen des Benzins, des Wasserstoffs und eines Hydrodesulfurisationskatalysators, der einen Oxidträger und eine aktive Phase umfasst, die ein Metall der Gruppe VIB und ein Metall der Gruppe VIII umfasst, in mindestens einem Reaktor bei einer Temperatur zwischen 210 und 320 °C, bei einem Druck zwischen 1 und 4 MPa, mit einer Raumgeschwindigkeit zwischen 1 und 10 $h^{-1}$ und einem Verhältnis zwischen dem in Norm-$m^3$ pro Stunde ausgedrückten Volumenstrom von Wasserstoff und dem in $m^3$ pro Stunde ausgedrückten Volumenstrom des zu behandelnden Einsatzmaterials unter Standardbedingungen zwischen 100 und 600 $Nm^3/m^3$, so dass mindestens ein Teil der schwefelhaltigen Verbindungen zu $H_2S$ umgewandelt wird,
b) Inkontaktbringen des aus dem Schritt a) hervorgegangenen Abstroms ohne Entfernung des gebildeten $H_2S$, des Wasserstoffs und eines Hydrodesulfurisierungskatalysators, der einen Oxidträger und eine aktive Phase umfasst, die aus mindestens einem Metall der Gruppe VIII besteht, in mindestens einem Reaktor bei einer Temperatur zwischen 280 und 400 °C, bei einem Druck zwischen 0,5 und 5 MPa, mit einer Raumgeschwindigkeit zwischen 1 und 10 $h^{-1}$ und einem Verhältnis zwischen dem in Norm-$m^3$ pro Stunde ausgedrückten Volumenstrom von Wasserstoff und dem in $m^3$ pro Stunde ausgedrückten Volumenstrom des zu behandelnden Einsatzmaterials unter Standardbedingungen zwischen 100 bis 600 $Nm^3/m^3$, wobei die Temperatur des Schritts b) höher ist als die Temperatur des Schritts a),
c) Durchführen eines Schritts des Abtrennens des gebildeten und in dem aus dem Schritt b) hervorgegangenen Abstrom vorhandenen $H_2S$,
d) Inkontaktbringen des aus dem Schritt c) hervorgegangenen, an $H_2S$ abgereicherten Abstroms, des Wasserstoffs und eines Hydrodesulfurisationskatalysators, der einen Oxidträger und eine aktive Phase umfasst, die ein Metall der Gruppe VIB und ein Metall der Gruppe VIII umfasst, oder eine aktive Phase, die aus mindestens einem Metall der Gruppe VIII besteht, in mindestens einem Reaktor bei einer Temperatur zwischen 150 und 330 °C, bei einem Druck zwischen 0,5 und 5 MPa, mit einer Raumgeschwindigkeit zwischen 0,5 und 10 $h^{-1}$ und einem Verhältnis zwischen dem Volumenstrom von Wasserstoff und dem Volumenstrom des zu behandelnden Einsatzmaterials, das geringer als das des Schritts a) ist, wobei das Verhältnis zwischen dem in Norm-$m^3$ pro Stunde ausgedrückten Volumenstrom von Wasserstoff und dem in $m^3$ pro Stunde ausgedrückten Volumenstrom des zu behandelnden Einsatzmaterials unter Standardbedingungen zwischen 40 und 250 $Nm^3/m^3$ beträgt,
e) Durchführen eines Schritts des Abtrennens des gebildeten und in dem aus dem Schritt d) hervorgegangenen Abstrom vorhandenen $H_2S$.

2. Verfahren nach Anspruch 1, wobei der Katalysator des Schritts a) Aluminiumoxid und eine aktive Phase umfasst, die Kobalt, Molybdän und gegebenenfalls Phosphor umfasst, wobei der Katalysator einen Gehalt bezogen auf das

Gesamtgewicht des Kobaltoxidkatalysators in der Form CoO zwischen 0,1 und 10 Gew.-%, einen Gehalt bezogen auf das Gesamtgewicht des Molybdänoxidkatalysators in der Form $MoO_3$ zwischen 1 und 20 Gew.-%, ein molares Verhältnis Kobalt/Molybdän zwischen 0,1 und 0,8, einen Gehalt bezogen auf das Gesamtgewicht des Phosphoroxidkatalysators in der Form $P_2O_5$ zwischen 0,3 und 10 Gew.-%, wenn der Phosphor vorhanden ist, enthält, wobei der Katalysator eine spezifische Oberfläche zwischen 30 und 180 $m^2$/g aufweist.

**3.** Verfahren nach einem der vorhergehenden Ansprüche, wobei der Katalysator des Schritts b) aus Aluminiumoxid und Nickel besteht, wobei der Katalysator einen Gehalt bezogen auf das Gesamtgewicht des Nickeloxidkatalysators in der Form NiO zwischen 5 und 20 Gew.-% enthält, wobei der Katalysator eine spezifische Oberfläche zwischen 30 und 180 $m^2$/g aufweist.

**4.** Verfahren nach einem der vorhergehenden Ansprüche, wobei der Katalysator des Schritts d) aus Aluminiumoxid und einer aktiven Kobalt-Molybdän-Phase besteht, wobei der Katalysator einen Gehalt bezogen auf das Gesamtgewicht des Kobaltoxidkatalysators in der Form CoO zwischen 0,1 und 10 Gew.-%, einen Gehalt bezogen auf das Gesamtgewicht des Molybdänoxidkatalysators in der Form $MoO_3$ zwischen 1 und 20 Gew.-%, ein molares Verhältnis Kobalt/Molybdän zwischen 0,1 und 0,8 enthält, wobei der Katalysator eine spezifische Oberfläche zwischen 30 und 180 $m^2$/g aufweist.

**5.** Verfahren nach einem der Ansprüche 1 bis 3, wobei der Katalysator des Schritts d) aus Aluminiumoxid und Nickel besteht, wobei der Katalysator einen Gehalt bezogen auf das Gesamtgewicht des Nickeloxidkatalysators in der Form NiO zwischen 5 und 20 Gew.-% enthält, wobei der Katalysator eine spezifische Oberfläche zwischen 30 und 180 $m^2$/g aufweist.

**6.** Verfahren nach einem der vorhergehenden Ansprüche, wobei die Temperatur des Schritts b) um mindestens 5 °C höher als die Temperatur des Schritts a) ist.

**7.** Verfahren nach einem der vorhergehenden Ansprüche, wobei die Temperatur des Schritts d) um mindestens 5 °C niedriger als die Temperatur des Schritts b) ist.

**8.** Verfahren nach einem der vorhergehenden Ansprüche, wobei der Quotient Verhältnis zwischen dem Volumenstrom von Wasserstoff und dem Volumenstrom des zu behandelnden Einsatzmaterials im Einlass des Reaktors des Schritts a) / Verhältnis zwischen dem Volumenstrom von Wasserstoff und dem Volumenstrom des zu behandelnden Einsatzmaterials im Einlass des Reaktors des Schritts d) größer oder gleich 1,05 ist.

**9.** Verfahren nach einem der vorhergehenden Ansprüche, wobei die Abtrennschritte c) und e) in einem Debutanisierer oder einem Strippabschnitt durchgeführt werden.

**10.** Verfahren nach einem der vorhergehenden Ansprüche, wobei vor dem Schritt a) ein Schritt zur Destillation des Benzins durchgeführt wird, so dass das Benzin in mindestens zwei leichtflüchtige und schwerflüchtige Schnitte fraktioniert wird und der schwerflüchtige Benzinschnitt in den Schritten a), b), c), d) und e) behandelt wird.

**11.** Verfahren nach einem der vorhergehenden Ansprüche, wobei das Benzin vor dem Schritt a) und vor einem etwaigen Destillationsschritt mit Wasserstoff und einem Katalysator zur selektiven Hydrierung in Kontakt gebracht wird, um die in dem Benzin enthaltenen Diolefine selektiv zu Olefinen zu hydrieren.

**12.** Verfahren nach einem der vorhergehenden Ansprüche, wobei das Benzin ein durch katalytisches Cracken erhaltenes Benzin ist.

## Claims

**1.** Process for treating a petrol containing sulfur compounds, olefins and diolefins, the process comprising at least the following steps:

a) the petrol, hydrogen and a hydrodesulfurization catalyst comprising an oxide support and an active phase comprising a metal from group VIB and a metal from group VIII are brought into contact in at least one reactor at a temperature of between 210 and 320°C, at a pressure of between 1 and 4 MPa, with a space velocity of between 1 and 10 $h^{-1}$ and a ratio of the hydrogen flow rate, expressed in normal $m^3$ per hour, to the flow rate of feedstock to be

treated, expressed in $m^3$ per hour at standard conditions, of between 100 and 600 $Nm^3/m^3$, so as to convert at least a portion of the sulfur compounds into $H_2S$,

b) the effluent resulting from step a) without removal of the $H_2S$ formed, hydrogen and a hydrodesulfurization catalyst comprising an oxide support and an active phase consisting of at least one metal from group VIII are brought into contact in at least one reactor at a temperature of between 280 and 400°C, at a pressure of between 0.5 and 5 MPa, with a space velocity of between 1 and 10 $h^{-1}$ and a ratio of the hydrogen flow rate, expressed in normal $m^3$ per hour, to the flow rate of feedstock to be treated, expressed in $m^3$ per hour at standard conditions, of between 100 and 600 $Nm^3/m^3$, said temperature of step b) being higher than the temperature of step a),

c) a step of separation of the $H_2S$ formed and present in the effluent resulting from step b) is carried out,

d) the effluent depleted in $H_2S$ resulting from step c), hydrogen and a hydrodesulfurization catalyst comprising an oxide support and an active phase comprising a metal from group VIB and a metal from group VIII or an active phase consisting of at least one metal from group VIII are brought into contact in at least one reactor at a temperature of between 150 and 330°C, at a pressure of between 0.5 and 5 MPa, with a space velocity of between 0.5 and 10 $h^{-1}$ and a ratio of the hydrogen flow rate to the flow rate of feedstock to be treated which is lower than that of step a), said ratio of the hydrogen flow rate, expressed in normal $m^3$ per hour, to the flow rate of feedstock to be treated, expressed in $m^3$ per hour at standard conditions, being between 40 and 250 $Nm^3/m^3$,

e) a step of separation of the $H_2S$ formed and present in the effluent resulting from step d) is carried out.

**2.** Process according to Claim 1, in which the catalyst of step a) comprises alumina and an active phase comprising cobalt, molybdenum and optionally phosphorus, said catalyst containing a content by weight, relative to the total weight of catalyst, of cobalt oxide, in CoO form, of between 0.1% and 10%, a content by weight, relative to the total weight of catalyst, of molybdenum oxide, in $MoO_3$ form, of between 1% and 20%, a cobalt/molybdenum molar ratio of between 0.1 and 0.8, and a content by weight, relative to the total weight of catalyst, of phosphorus oxide, in $P_2O_5$ form, of between 0.3% and 10% when phosphorus is present, said catalyst having a specific surface area of between 30 and 180 $m^2/g$.

**3.** Process according to one of the preceding claims, in which the catalyst of step b) consists of alumina and of nickel, said catalyst containing a content by weight, relative to the total weight of catalyst, of nickel oxide, in NiO form, of between 5% and 20%, said catalyst having a specific surface area of between 30 and 180 $m^2/g$.

**4.** Process according to one of the preceding claims, in which the catalyst of step d) consists of alumina and of a cobalt-molybdenum active phase, said catalyst containing a content by weight, relative to the total weight of catalyst, of cobalt oxide, in CoO form, of between 0.1% and 10%, a content by weight, relative to the total weight of catalyst, of molybdenum oxide, in $MoO_3$ form, of between 1% and 20%, and a cobalt/molybdenum molar ratio of between 0.1 and 0.8, said catalyst having a specific surface area of between 30 and 180 $m^2/g$.

**5.** Process according to one of Claims 1 to 3, in which the catalyst of step d) consists of alumina and of nickel, said catalyst containing a content by weight, relative to the total weight of catalyst, of nickel oxide, in NiO form, of between 5% and 20%, said catalyst having a specific surface area of between 30 and 180 $m^2/g$.

**6.** Process according to one of the preceding claims, in which the temperature of step b) is greater by at least 5°C than the temperature of step a).

**7.** Process according to one of the preceding claims, in which the temperature of step d) is lower by at least 5°C than the temperature of step b).

**8.** Process according to one of the preceding claims, in which the ratio of the ratio of the hydrogen flow rate to the flow rate of feedstock to be treated at the inlet of the reactor of step a)/the ratio of the hydrogen flow rate to the flow rate of feedstock to be treated at the inlet of the reactor of step d) is greater than or equal to 1.05.

**9.** Process according to one of the preceding claims, in which the separation steps c) and e) are carried out in a debutanizer or a stripping section.

**10.** Process according to one of the preceding claims, in which, before step a), a step of distillation of the petrol is carried out so as to fractionate said petrol into at least two, light and heavy, petrol cuts, and the heavy petrol cut is treated in steps a), b), c), d) and e).

**11.** Process according to one of the preceding claims, in which, before step a) and before any optional distillation step, the

petrol is brought into contact with hydrogen and a selective hydrogenation catalyst in order to selectively hydrogenate the diolefins contained in said petrol to give olefins.

**12.** Process according to one of the preceding claims, in which the petrol is a catalytic cracking petrol.

Figure 1

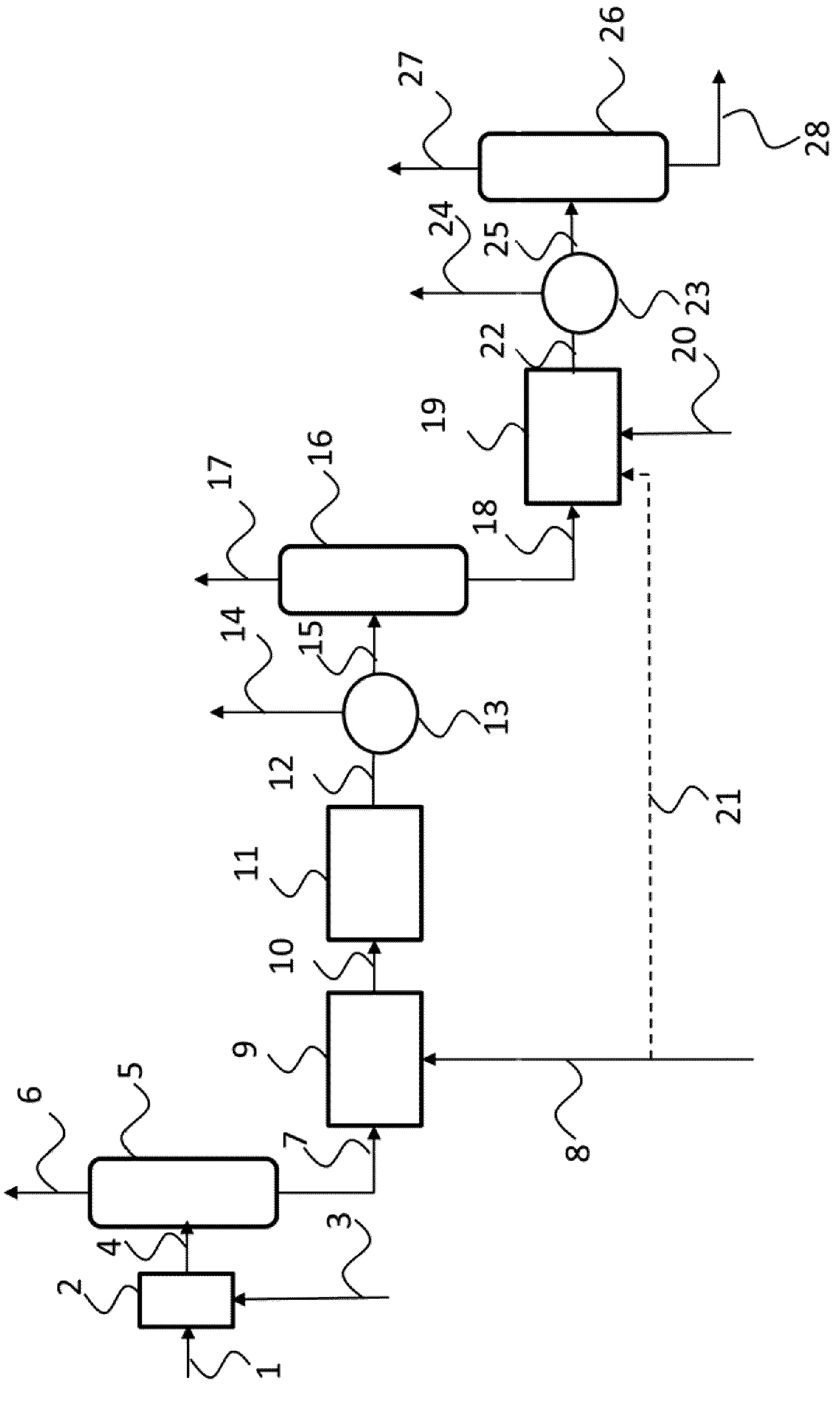

Figure 2

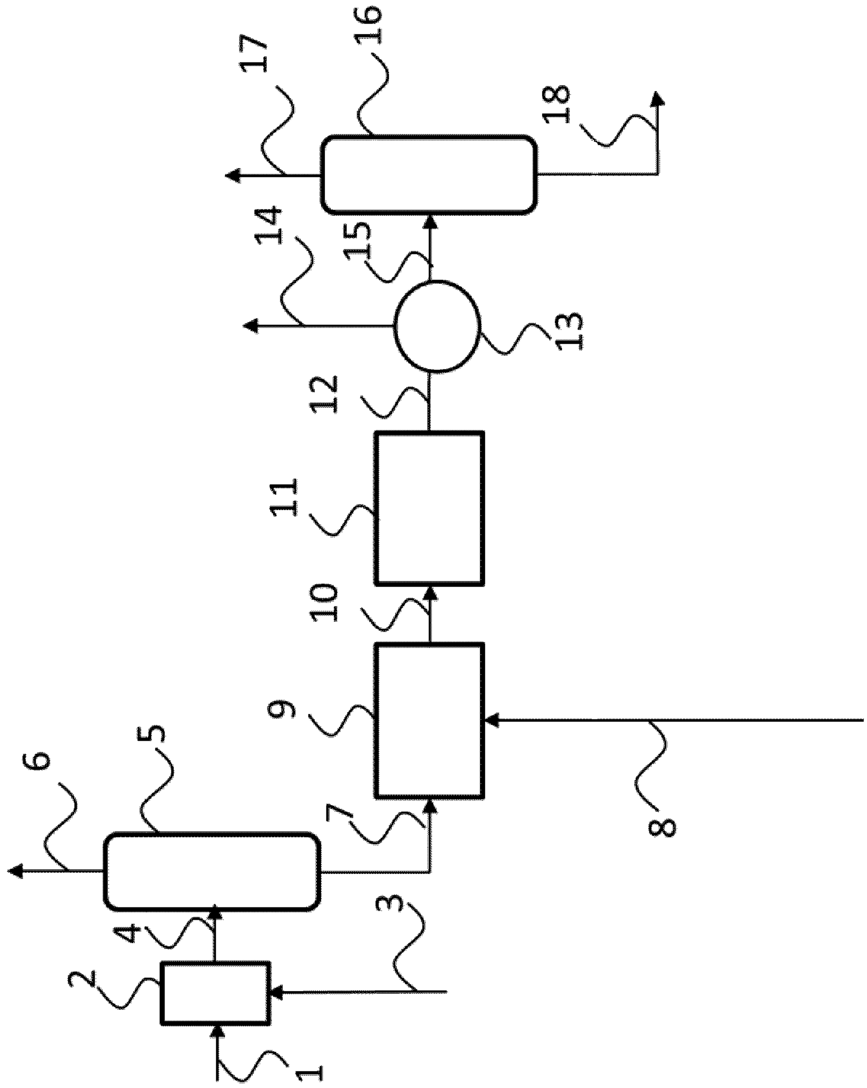

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1077247 A
- EP 1174485 A
- US 6231754 B
- WO 0140409 A
- WO 0228988 A
- WO 0179391 A
- US 7799210 B
- US 6960291 B
- US 2007114156 A
- EP 2861094 A
- WO 2018096063 A


### Littérature non-brevet citée dans la description


- **D.R. LIDE**. CRC Handbook of Chemistry and Physics. CRC press, 2000
- **ROUQUEROL F** ; **ROUQUEROL J.** ; **SINGH K.** Adsorption by Powders & Porous Solids: Principle, methodology and applications. Academic Press, 1999
- **ROUQUEROL F.** ; **ROUQUEROL J.** ; **SINGH K.** Adsorption by Powders & Porous Solids: Principle, methodology and applications. Academic Press, 1999